(19) Europäisches Patentamt
European Patent Office
Office européen des brevets

(11) **EP 4 187 446 A1**

(12) **DEMANDE DE BREVET EUROPEEN**

(43) Date de publication:
**31.05.2023 Bulletin 2023/22**

(21) Numéro de dépôt: **22207594.7**

(22) Date de dépôt: **15.11.2022**

(51) Classification Internationale des Brevets (IPC):
**G06N 3/096** *(2023.01)* **G06N 3/09** *(2023.01)*
**G06N 3/048** *(2023.01)* **G06N 3/084** *(2023.01)*

(52) Classification Coopérative des Brevets (CPC):
**G06N 3/084; G06N 3/048; G06N 3/09; G06N 3/096**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **30.11.2021 FR 2112726**

(71) Demandeur: **Orange**
**92130 Issy-les-Moulineaux (FR)**

(72) Inventeur: **LI, Wenbin**
**Chatillon Cedex 92326 (FR)**

(74) Mandataire: **Cabinet Beau de Loménie**
**158, rue de l'Université**
**75340 Paris Cedex 07 (FR)**

(54) **PROCÉDÉS D'ENTRAÎNEMENT ET D'UTILISATION D'UN RÉSEAU DE NEURONES ARTIFICIELS POUR IDENTIFIER UNE VALEUR DE PROPRIÉTÉ, ET SYSTÈME ASSOCIÉ**

(57) L'invention concerne un procédé d'entraînement d'un réseau de neurones (RN) artificiels pour que ledit réseau de neurones (RN) artificiels identifie une valeur de propriété parmi une pluralité de valeurs de propriétés, chaque propriété pouvant prendre au moins deux valeurs différentes..

Le procédé comprend :
- un entraînement primaire consistant à entraîner (S330) ledit réseau de neurones (RN) à identifier au moins une valeur cible (UNC1) ; et
- un entraînement secondaire pour détecter des faiblesses du modèle entraîné lors de l'entraînement primaire et renforcer ce modèle en (S370) augmentant le taux d'apprentissage de neurones de sortie du réseau qui sont associés à des valeurs de propriétés le plus souvent estimées à tort.

[Fig.3]

**Description**

Domaine Technique

La présente invention se rapporte au domaine de l'entraînement d'un réseau de neurones artificiels pour identifier une valeur de propriété, cette valeur de propriété pouvant être de nature quelconque.

Technique antérieure

Il est usuel, d'entrainer un réseau de neurones sur un ensemble de données pour qu'il soit en mesure d'identifier une valeur de propriété.

Mais dans de nombreux cas, le réseau de neurones ainsi entraîné n'est pas satisfaisant.

Il existe donc un besoin pour une solution permettant améliorer la robustesse d'un réseau de neurones à l'issue de sa phase d'apprentissage.

Exposé de l'invention

La présente invention concerne un procédé d'entraînement d'un réseau de neurones artificiels pour que ledit réseau de neurones artificiels identifie au moins une valeur d'une propriété parmi une pluralité de valeurs de propriétés, chaque propriété pouvant prendre au moins deux valeurs différentes, ce réseau de neurones artificiels comportant une couche de sortie comportant, pour au moins une dite valeur de propriété, un score de prédiction pour ladite valeur de propriété ;
ledit procédé comprenant un entraînement primaire consistant à entraîner ledit réseau de neurones à identifier au moins une valeur cible de propriété à partir d'un premier ensemble de données d'entraînement primaire étiquetées en associant ces données à un premier ensemble de valeurs cibles de propriétés, ledit procédé comportant en outre un entraînement secondaire comportant les étapes suivantes :

- obtention, pour au moins une première valeur cible d'une propriété cible, d'un ensemble de données d'entraînement secondaire ;
- identification d'une valeur estimée de la propriété cible associée à au moins une dite donnée d'entraînement secondaire, en utilisant le réseau de neurones artificiels entraîné par l'entrainement primaire ;
- pour chaque valeur estimée différente de la première valeur cible, obtention d'un nombre de confusions correspondant au nombre de fois où ladite valeur estimée a été estimée ;
- augmentation des taux d'apprentissage associés aux neurones de la couche de sortie du réseau de neurones associés à des valeurs d'intérêt correspondant à des valeurs estimées ayant les nombres de confusions les plus importants.

Dans un mode particulier de réalisation, l'entraînement primaire comporte les étapes suivantes :

- obtention du premier ensemble de données d'entraînement primaire ;
- application du premier ensemble de données d'entraînement primaire à l'entrée du réseau de neurones artificiels, et
- modification d'au moins un poids du réseau de neurones artificiels en fonction du premier ensemble de valeurs cibles de propriétés et des scores de prédictions obtenus.

Corrélativement, l'invention concerne un système d'entraînement d'un réseau de neurones artificiels pour que ledit réseau de neurones artificiels identifie au moins une valeur de propriété parmi une pluralité de valeurs de propriétés, chaque propriété pouvant prendre au moins deux valeurs différentes, le réseau de neurones artificiels comportant une couche de sortie comportant, pour au moins une dite valeur de propriété, un neurone configuré pour délivrer un score de prédiction pour ladite valeur propriété. Ce système comprend :

- un module d'obtention configuré pour obtenir un premier ensemble de données d'entraînement primaire étiquetées en associant ces données à un premier ensemble de valeurs cibles de propriétés;
- un module d'application configuré pour appliquer le premier ensemble de données d'entraînement primaire à l'entrée du réseau de neurones, pour entraîner, au cours d'un entraînement primaire, ledit réseau de neurones à identifier au moins une dite valeur cible de propriété,
- un module de modification configuré pour modifier au moins un poids du réseau de neurones artificiels en fonction du premier ensemble de valeurs cibles de propriétés et des scores de prédictions obtenus ;
- ledit module d'obtention étant configuré pour obtenir, pour au moins une première valeur cible d'une propriété cible, un ensemble de données d'entraînement secondaire ;

- ledit module d'application étant configuré pour appliquer, au cours d'un entraînement secondaire, au moins une donnée de l'ensemble de données d'entraînement secondaire à l'entrée du réseau de neurones pour identifier une valeur estimée de ladite propriété cible associée à au moins une dite donnée d'entraînement secondaire, en utilisant le réseau de neurones artificiels entraîné par ledit entrainement primaire ;
- ledit module de modification étant configuré pour obtenir, pour chaque valeur estimée différente de ladite première valeur cible, un nombre de confusions correspondant au nombre de fois où ladite valeur estimée a été estimée et pour augmenter des taux d'apprentissage associés aux neurones de la couche de sortie du réseau de neurones associés à des valeurs d'intérêt correspondant à des valeurs estimées ayant les nombres de confusions les plus importants.

Une fois l'entraînement primaire terminé, un entraînement secondaire (ou post-entraînement) est mis en œuvre afin de détecter des faiblesses du modèle entrainé lors de l'entraînement primaire et de renforcer ce modèle en utilisant des données ciblées et un taux d'apprentissage adapté.

Ce renforcement est effectué en augmentant le taux d'apprentissage des neurones de sortie du réseau qui sont associés à des valeurs de propriétés le plus souvent estimées à tort.

Dans un mode de réalisation, lors de l'entraînement primaire, les taux d'apprentissage associés aux neurones de la couche de sortie du réseau de neurones ont tous la même valeur.

Dans un mode de réalisation particulier, l'entraînement primaire et l'entraînement secondaire utilisent une méthode de rétropropagation du gradient et l'augmentation d'un taux d'apprentissage consiste à multiplier ce taux d'apprentissage par une constante.

Dans un mode de réalisation, le réseau de neurones artificiels est configuré pour identifier un usage numérique parmi un ensemble d'usages numériques, chaque usage numérique étant décrit par un comportement numérique associé à au moins une dite propriété et par un environnement numérique associé à au moins une dite propriété.

Ce mode particulier de réalisation de l"invention permet l'identification d'usages numériques au niveau de dispositifs dits intelligents.

Dans ce mode de réalisation, l'entraînement primaire consiste à entraîner le réseau de neurones à identifier au moins un usage numérique cible parmi l'ensemble d'usages numériques,

- les données dudit premier ensemble de données d'entraînement primaire étant extraites d'une première pluralité de paquets réseau capturés lors d'au moins une exécution d'une application associée audit premier usage numérique cible, lesdites données d'entraînement primaire étant étiquetées en associant ces données à un premier ensemble de valeurs cibles de propriétés décrivant au moins un comportement numérique et un environnement numérique du premier usage numérique cible,
- les données dudit ensemble de données d'entraînement secondaire obtenu pour ladite au moins une première valeur cible étant extraites d'une deuxième pluralité de paquets réseau capturés lors d'au moins une exécution d'une application associée à un usage numérique dont ladite propriété cible est décrite par la première valeur cible.

Les paquets réseau peuvent comprendre de nombreuses informations décrivant des comportements et des exigences de l'utilisateur du dispositif intelligent, et l'analyse de ces traces réseau est ainsi utile pour, par exemple, fournir des services adaptés aux utilisateurs.

Il existe à ce jour des techniques d'analyses de contenus de paquets permettant d'inférer un comportement numérique au moyen de règles prédéfinies. Cependant, de telles techniques utilisent des données à caractère personnel (par exemple des adresses IP et MAC, ou encore des contenus de paquets non chiffrés), ainsi que des données à caractère non immuable (par exemple l'adresse IP d'un serveur d'une application utilisée peut varier en fonction de la géolocalisation de l'utilisateur et en fonction de mises à jour). Ces techniques ne protègent ainsi pas la vie privée des utilisateurs et manquent de fiabilité.

Il existe également des techniques d'apprentissage automatique permettant d'identifier une unique propriété numérique, telle qu'une application utilisé, ce qui ne permet pas de définir complètement un usage numérique.

Mais il n'existe pas de solution permettant d'identifier un usage numérique de manière fiable

Ainsi, et de façon très avantageuse, dans ce mode de réalisation, l'entraînement primaire permet d'entraîner un même réseau de neurones à identifier plusieurs propriétés décrivant l'usage numérique, dont au moins une propriété décrivant un comportement numérique et un environnement numérique de cet usage numérique, ce qui améliore la fiabilité et la précision de l'identification de l'usage numérique.

Cet entraînement primaire permet en outre la réduction du réseau de neurones entraîné, qui consomme ainsi moins de ressources de calcul.

Dans un mode de réalisation particulier, les propriétés définissant l'usage numérique comprennent au moins une propriété parmi les propriétés suivantes :

- une catégorie d'application utilisée,
- une application utilisée,
- une opération mise en œuvre au niveau de l'application,
- un état d'interaction de l'utilisateur,
- un dispositif utilisé,
- un système d'exploitation utilisé,
- un navigateur utilisé, et
- au moins une caractéristique liée d'un réseau de communication, par exemple un débit de connexion Internet ou une latence.

Dans un mode de réalisation, le procédé permet d'entraîner un même réseau de neurones à identifier des propriétés décrivant le comportement numérique et des propriétés décrivant l'environnement numérique, ce qui améliore la fiabilité ainsi que la précision de l'identification de l'usage numérique.

Dans un mode de réalisation particulier, le premier ensemble de données d'entraînement primaire et le premier ensemble de données d'entraînement secondaire comprennent, pour chaque paquet de la première et de la deuxième pluralité de paquets réseau, au moins une donnée d'entraînement parmi les données d'entraînement suivantes :

- la taille du paquet,
- une durée entre la réception ou l'envoi du paquet et la réception ou l'envoi d'un paquet précédent d'une même session ou d'un même protocole que ledit paquet,
- un port source du paquet,
- un port destination du paquet,
- une direction du paquet, et
- un protocole d'une couche de plus haut niveau dans le paquet au sens du modèle OSI (de l'anglais « Open Systems Interconnection »).

Le procédé permet d'entraîner un même réseau de neurones à identifier un usage numérique à partir de données d'entraînement ne dépendant pas de la localisation ou du moment de l'usage, ce qui améliore la fiabilité de l'identification de l'usage numérique. En outre, le procédé n'utilise pas de données à caractère personnel, ce qui permet de protéger la vie privée des utilisateurs. En effet, les données d'entraînement listées de l'ensemble de données d'entraînement n'ont pas de caractère personnel, contrairement à d'autres données des paquets réseau, telles que l'adresse IP.

Dans un mode de réalisation particulier, l'entraînement primaire est réitéré pour au moins un deuxième ensemble de données d'entraînement associé à un deuxième ensemble de valeurs cibles de propriétés décrivant un deuxième usage numérique.

Dans un mode de réalisation, l'entraînement secondaire est réitéré pour un au moins une deuxième valeur cible d'une propriété cible.

Dans un mode de réalisation particulier, l'entraînement primaire utilise un apprentissage multitâche.

Dans un mode de réalisation particulier, l'obtention dudit premier ensemble de données d'entraînement primaire et l'obtention dudit premier ensemble de données d'entraînement secondaire comprennent chacun les étapes suivantes :

- obtention d'un sous ensemble de paquets réseau et, pour chaque paquet réseau dudit sous ensemble :

  - obtention d'un ensemble de données du paquet réseau, et
  - traitement dudit ensemble de données du paquet réseau, de sorte à obtenir le premier ensemble de données d'entraînement,

l'étape de traitement comprenant :

- pour chaque donnée dudit ensemble de données du paquet réseau prenant la forme d'une variable catégorielle, conversion de la valeur en un vecteur de valeurs binaires, et
- pour chaque donnée dudit ensemble de données du paquet réseau ayant une valeur numérique définie dans un intervalle différent de l'intervalle compris entre 0 et 1, normalisation de la valeur de sorte qu'elle soit définie dans l'intervalle compris entre 0 et 1.

Dans un mode de réalisation particulier, le sous ensemble de paquets réseau comprend un maximum de cent paquets réseau.

Dans un mode de réalisation particulier, le procédé comprend en outre une étape de filtrage d'au moins un paquet réseau qui n'est pas associé à une opération mise en œuvre par un utilisateur au niveau d'une application.

L'invention concerne en outre un réseau de neurones artificiels entraîné par le procédé d'entraînement tel que décrit ci-dessus.

Dans un mode particulier de réalisation, le dispositif est une passerelle réseau.

De plus, l'invention concerne un dispositif comprenant un réseau de neurones artificiels tel que décrit ci-dessus.

En outre, l'invention concerne un procédé d'utilisation du réseau de neurones artificiels tel que décrit ci-dessus, pour identifier au moins une valeur d'une propriété parmi un ensemble de valeurs de propriétés,

ledit procédé d'utilisation comprenant les étapes suivantes :

- obtention d'un ensemble de données,
- application de l'ensemble de données d'utilisation à l'entrée du réseau de neurones artificiels, de sorte à identifier la valeur de propriété associée à l'ensemble de données d'utilisation,

ladite valeur de propriété identifiée étant celle ayant le score de prédiction associé le plus grand parmi les scores de prédiction des autres valeurs de la même propriété.

Dans un mode de réalisation, le procédé d'utilisation est utilisé pour identifier un usage numérique, lesdites données d'utilisation étant obtenues à partir d'une pluralité de paquets réseau.

Dans ce mode de réalisation, l'usage numérique étant identifié an associant à chaque valeur de chaque propriété associé audit usage numérique un score de prédiction, la valeur de chaque propriété de l'usage numérique étant identifiée en déterminant la valeur de la propriété ayant le score de prédiction associé le plus grand parmi les scores de prédiction des autres valeurs de la même propriété, ledit usage numérique étant décrit par chaque valeur identifiée de propriété.

Dans un mode particulier de réalisation, le procédé d'utilisation est mis en œuvre par une passerelle domestique, ladite pluralité de paquets réseau transitant sur un réseau de communications auquel est connectée ladite passerelle domestique.

Dans un mode particulier de réalisation, le procédé d'entraînement est également mis en œuvre par la passerelle domestique. En variante, le réseau de neurones est entraîné par un autre dispositif et installé sur la passerelle domestique après son entraînement.

Dans un mode particulier de réalisation, le procédé d'utilisation comprend une étape d'utilisation de l'usage numérique identifié, comprenant au moins une utilisation parmi les utilisations suivantes :

- recommandation d'un service personnalisé à l'utilisateur d'un terminal en fonction de l'usage numérique identifié,
- contrôle d'un usage indésirable au niveau du terminal,
- optimisation de la répartition de charges dans le réseau de communications,
- reconnaissance d'un utilisateur du réseau de communications,
- allocation des ressources internes du dispositif mettant en œuvre ledit procédé d'utilisation.

Dans un mode particulier de réalisation, les différentes étapes du procédé d'entraînement selon l'invention sont déterminées par des instructions de programmes d'ordinateurs.

De plus, dans un mode particulier de réalisation, les différentes étapes du procédé d'utilisation selon l'invention sont déterminées par des instructions de programmes d'ordinateurs.

En conséquence, l'invention vise aussi un premier programme d'ordinateur, sur un premier support d'informations, ce premier programme comportant des instructions adaptées à la mise en œuvre des étapes d'un procédé d'entraînement selon l'invention.

L'invention vise en outre un deuxième programme d'ordinateur, sur un deuxième support d'informations, ce deuxième programme comportant des instructions adaptées à la mise en œuvre des étapes d'un procédé d'utilisation selon l'invention.

Chacun de ces premier et deuxième programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un premier support d'informations lisible par un ordinateur, et comportant des instructions du premier programme d'ordinateur tel que mentionné ci-dessus.

L'invention vise de plus un deuxième support d'informations lisible par un ordinateur, et comportant des instructions du deuxième programme d'ordinateur tel que mentionné ci-dessus.

Les premier et deuxième supports d'informations peuvent être n'importe quelle entité ou dispositif capable de stocker le programme. Par exemple, chacun de ces supports peut comporter un moyen de stockage, tel qu'une ROM, par exemple un CD ROM ou une ROM de circuit microélectronique, ou encore un moyen d'enregistrement magnétique, par exemple un disque dur.

D'autre part, chacun de ces supports d'informations peut être un support transmissible tel qu'un signal électrique ou optique, qui peut être acheminé via un câble électrique ou optique, par radio ou par d'autres moyens. Chacun des programmes selon l'invention peut être en particulier téléchargé sur un réseau de type Internet.

Alternativement, chaque support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] La figure 1 représente, de manière schématique, un système d'entraînement selon un exemple de mode de réalisation de l'invention ;

[Fig. 2] La figure 2 représente, de manière schématique, un exemple d'architecture du système d'entraînement de la figure 1 ;

[Fig. 3] La figure 3 représente, sous forme d'organigramme, les principales étapes d'un procédé d'entraînement selon un exemple de mode de réalisation de l'invention ;

[Fig. 4A] La figure 4A représente, de manière schématique, un exemple de trace réseau pouvant être obtenue lors de la mise en œuvre du procédé de la figure 3 ;

[Fig. 4B] La figure 4B représente, de manière schématique, une autre vue de la trace réseau de la figure 4A ;

[Fig. 5] La figure 5 représente, de manière schématique, un exemple de structure de réseau de neurones pouvant être définie lors de la mise en œuvre du procédé de la figure 3 ;

[Fig. 6] La figure 6 représente, sous forme d'organigramme, les principales étapes d'un procédé d'utilisation selon un exemple de mode de réalisation de l'invention ;

[Fig. 7] La figure 7 représente, de manière schématique, un exemple de premier usage numérique cible pouvant être utilisé lors de la mise en œuvre du procédé de la figure 3 ; et

[Fig. 8] La figure 8 représente un extrait d'une matrice de confusion pouvant être utilisée dans un mode de réalisation de l'invention.

Description des modes de réalisation

La présente invention concerne notamment un procédé d'entraînement d'un réseau de neurones artificiels pour que ledit réseau de neurones artificiels identifie une valeur de propriété parmi une pluralité de valeurs de propriétés.

Ce procédé d'entraînement comporte un entrainement primaire et au moins un entrainement secondaire. L'entraînement secondaire est effectué après l'entraînement primaire et peut aussi être qualifié de post-entraînement.

La description détaillée se place dans le contexte dans lequel le réseau de neurones est configuré pour détecter un usage numérique parmi un ensemble d'usages numériques.

Chaque usage numérique comprend un comportement numérique et un environnement numérique, et est associé à une pluralité de propriétés techniques dont les valeurs décrivent l'usage numérique, chaque propriété pouvant prendre au moins deux valeurs différentes.

Plus précisément, la valeur d'au moins une propriété de la pluralité de propriétés permet de décrire ou qualifier le comportement numérique de l'usage numérique, et la valeur d'au moins une autre propriété de la pluralité de propriétés permet de décrire ou qualifier l'environnement numérique de l'usage numérique.

D'une façon générale, le comportement numérique peut comporter l'ensemble des données liées à l'exécution d'une application. La ou les propriétés décrivant un comportement numérique utilisées sont typiquement une catégorie d'application utilisée, une application utilisée, une opération mise en œuvre au niveau de l'application et/ou un état d'interaction de l'utilisateur.

Par « application », on entend un logiciel installé en local sur le dispositif utilisé, ou indépendant (de type « standalone application », en terminologie anglo-saxonne), ou encore une application web (ou site web) à laquelle on accède par un navigateur.

L'état d'interaction indique si l'utilisateur interagit avec l'application utilisée, i.e. s'il met en œuvre une opération au niveau de l'application. L'état d'interaction prend ainsi une première valeur (typiquement « 1 ») lorsque l'utilisateur met en œuvre une opération au niveau de l'application utilisé, ou prend une deuxième valeur (typiquement « 0 ») lorsque l'utilisateur ne met pas en œuvre d'opération (l'application étant ouverte dans que l'utilisateur soit actif), ou lorsqu'aucune application n'est utilisée.

D'une façon générale, l'environnement numérique peut comporter l'ensemble des capacités matérielles et logicielles du terminal qui échange le flux ou du réseau. Par exemple, la ou les propriétés décrivant l'environnement numérique utilisées sont typiquement un dispositif utilisé (par exemple un terminal fixe ou mobile tel qu'un ordinateur personnel, une tablette, une télévision ou un smartphone), un système d'exploitation utilisé (par exemple Windows 10, Ubuntu, Android, Mac ou iOS), un navigateur utilisé (par exemple Chrome, Firefox, Edge, Safari ou Opéra), et/ou au moins une caractéristique liée à un réseau de communication, par exemple un débit de connexion Internet (par exemple un débit de connexion montant et/ou un débit de connexion descendant) ou une latence.

Les propriétés « débit de connexion montant » et « débit de connexion descendant » peuvent par exemple prendre chacune quatre valeurs en fonction du débit mesuré, typiquement une première valeur pour un débit mesuré supérieur à 1 Mbps (Mégabit par seconde), une deuxième valeur pour un débit compris entre 1 et 10 Mbps, une troisième valeur pour un débit compris entre 10 et 100 Mbps, et une quatrième valeur pour un débit supérieur à 1 Gbps (Gigabit par seconde).

La propriété « latence » peut par exemple prendre chacune six valeurs par exemple <1ms, 1-10ms, 10-100ms, 100-1000ms, 1-10s, >10s.

Chaque usage numérique de l'ensemble d'usages numériques est ainsi typiquement associé à au moins deux propriétés parmi les propriétés suivantes (typiquement toutes les propriétés suivantes) : la catégorie d'application utilisée, l'application utilisée, l'opération mise en œuvre au niveau de l'application, l'état d'interaction de l'utilisateur, le dispositif utilisé, le système d'exploitation utilisé, le débit de connexion montant, le débit de connexion descendant et, lorsque l'application est une application web, le navigateur utilisé. Chaque usage numérique diffère d'un autre usage numérique par la valeur d'au moins une de ces propriétés.

Le tableau 1 ci-dessous énumère des exemples de valeurs que peut prendre la propriété « catégorie d'application utilisée », et pour chaque valeur de catégorie d'application, des exemples de valeurs que peuvent prendre les propriétés « applications utilisé » et « opération mise en œuvre au niveau de l'application ».

[Table 1]

| CATEGORIES D'APPLICATION | APPLICATIONS | OPERATIONS |
|---|---|---|
| VideoStreaming | Youtube<br>Dailymotion<br>Twitch<br>Mixer<br>Caffeine<br>MonolovTV<br>Orange TV<br>Peloton<br>Orange VoD<br>Netflix<br>Hulu<br>Disney+<br>Amazon Prime Video | Connection<br>BrowseRandomClick<br>BrowseKeywordSearch<br>PlayContent<br>LikeCommentShare<br>SubscribeUnsubscribe<br>PublishContent |
| | HBO Max<br>CBS All Access<br>AfreecaTV<br>NAVER | |
| SearchEngine | Google<br>Bing<br>DuckDuckGo<br>Baidu | Connection<br>BrowseRandomClick<br>BrowseKeywordSearch<br>ClickSearchResult |

(suite)

| CATEGORIES D'APPLICATION | APPLICATIONS | OPERATIONS |
|---|---|---|
| | Yahoo<br>Yandex<br>Ask | MapSearch<br>MapBrowse<br>ImageSearch ImageBrowse |
| InfoSites | Yahoo<br>Orange<br>Reddit<br>Wikipedia<br>Sohu<br>360<br>Sina<br>Okezone<br>CSDN<br>StackOverFlow<br>Worldometers<br>WordPress | Connection<br>BrowseRandomClick<br>BrowseKeywordSearch<br>PlayContent |
| Gaming | LeagueOfLegend<br>PlayerUnknown<br>WorldOfWarcraft<br>AddictingGames<br>Pogo<br>Miniclip<br>Steam | Connection<br>PlayGame<br>BrowseRandomClick<br>BrowseKeywordSearch<br>DownloadGame |
| | GOG<br>PlayerUnknown's Battlegrounds<br>Fortnite Battle Royale<br>Call of Duty<br>Roblox<br>WarThunder<br>Minecraft<br>Overwatch<br>Warframe<br>OrangeJeux | |
| Social | Facebook<br>LinkedIn<br>Twitter<br>Pinterest<br>Instagram<br>Weibo<br>Snpachat<br>TikTok<br>VK<br>ODNOKLASSNIKI | Connection<br>BrowseRandomClick<br>Messaging<br>Networking<br>PublishContent<br>LikeCommentShare |
| Messaging | Skype<br>Whatsapp<br>LINE<br>WeChat<br>QQ<br>Discord | Connection<br>BrowseRandomClick<br>BrowseKeywordSearch<br>Messaging<br>VoiceCall<br>VideoCall |

(suite)

| CATEGORIES D'APPLICATION | APPLICATIONS | OPERATIONS |
|---|---|---|
| | Signal<br>Facebook Messenger<br>WEBRTC<br>Gmail<br>Hotmail<br>Thunderbird<br>Outlook | |
| | Zoom<br>Microsoft Teams<br>Webex<br>GoToMeeting<br>MailOrange | |
| FileSharing | DropBox<br>GoogleDrive<br>iCloud<br>Samsung<br>Samsung Cloud<br>SharePoint<br>FileZila(FTP)<br>WinSCP(FTP)<br>uTorrent(BT)<br>bitTorrent(BT)<br>AppStore<br>GooglePlay<br>Microsoft Store | Connection<br>BrowseRandomClick<br>BrowseKeywordSearch<br>DownloadContent<br>UploadContent |
| AudioStreaming | Spotify<br>Deezer<br>Pandora<br>ShoutCast<br>BBCRadio<br>Orange Radio<br>Podcasts | Connection<br>BrowseRandomClick<br>BrowseKeywordSearch<br>PlayAudio<br>LikeCommentShare<br>SubscribeUnsubscribe |
| MarketPlace | Amazon<br>Ebay<br>Aliexpress<br>Tabao<br>Alibaba<br>JD | Connection<br>BrowseRandomClick<br>BrowseKeywordSearch<br>AddFavorite |

Pour la propriété « catégorie d'application » :

- la valeur « VideoStreaming » indique l'application utilisée est une application de diffusion en continu de fichiers vidéos,
- la valeur « SearchEngine » indique l'application utilisée est un moteur de recherche,
- la valeur « InfoSites » indique que l'application utilisée est une application d'information,
- la valeur « Gaming » indique que l'application utilisée est un jeu,
- la valeur « Social » indique que l'application utilisée est un réseau social,
- la valeur « Messaging » indique que l'application utilisée est une application d'appels et/ou d'envoi de messages,
- la valeur « FileSharing » indique que l'application utilisée est une application de partage de fichiers,

- la valeur « AudioStreaming » indique que l'application utilisée est une application de diffusion en continu de fichiers audio, et
- la valeur « MarketPlace » indique que l'application utilisée est une application de commerce en ligne.

Pour la propriété « opération » :

- la valeur « Connection » indique que l'utilisateur se connecte à un site web ou une application,
- la valeur « BrowseRandomClick » indique que l'utilisateur clique sur un lien interne, c'est-à-dire un lien hypertexte situé sur une application (par exemple une page web) et renvoyant vers une autre page ou ressource, par exemple une image ou un document, sur le même site web,
- la valeur « BrowseKeywordSearch » indique que l'utilisateur cherche le résultat d'un mot dans une barre de recherche de l'application,
- la valeur « PlayContent » indique que l'utilisateur regarde une vidéo pendant 15 secondes,
- la valeur « PlayGame » indique que l'utilisateur joue à un jeu pendant 30 secondes,
- la valeur « PlayAudio » indique que l'utilisateur écoute un document audio pendant 15 secondes,
- la valeur « LikeCommentShare » indique que l'utilisateur aime, commente ou partage un élément vidéo, un élément sonore ou un message, sauf si le partage redirige vers une autre application,
- la valeur « SubscribeUnsubscribe » indique que l'utilisateur s'abonne ou se désabonne d'une chaîne,
- la valeur « PublishContent » indique que l'utilisateur télécharge une vidéo ou un fichier vers un serveur pendant 15 secondes,
- la valeur « DownloadContent » indique que l'utilisateur télécharge une vidéo ou un fichier pendant 15 secondes,
- la valeur « ClickSearchResult » indique que l'utilisateur clique sur un lien aléatoire donné par une page de résultats d'un moteur de recherche,
- la valeur « ImageSearch » indique que l'utilisateur cherche le résultat d'un mot donné fourni par un moteur de recherche d'images,
- la valeur « ImageBrowse » indique que l'utilisateur clique sur un lien aléatoire fourni par une page de résultats d'un moteur de recherche d'images,
- la valeur « MapSearch » indique que l'utilisateur cherche le résultat d'un mot sur la barre de recherche d'une cartographie en ligne d'un moteur de recherche,
- la valeur « MapBrowse » indique que l'utilisateur zoome, dézoome, clique sur un élément de la carte, ou modifie l'affichage sur une cartographie en ligne d'un moteur de recherche (« passe en streetView »),
- la valeur « Networking » indique que l'utilisateur demande à ajouter un ami ou rejoindre un groupe,
- la valeur « Messaging » indique que l'utilisateur envoie ou reçoit un message ou un mail,
- la valeur « AddFavorite » indique que l'utilisateur ajoute un objet à une liste de préférence (« wishlist », en terminologie anglosaxonne),
- la valeur « VoiceCall » indique que l'utilisateur passe un appel audio pendant 15 secondes, et
- la valeur « VideoCall » indique que l'utilisateur passe un appel vidéo pendant 15 secondes.

Le réseau de neurones artificiels identifie un usage numérique en associant à chaque valeur de chaque propriété associée aux usages numériques un score de prédiction.

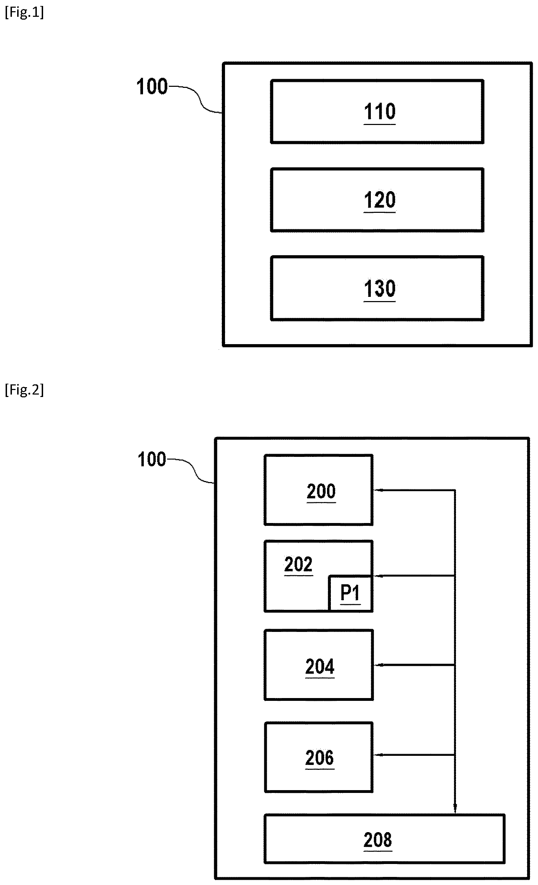

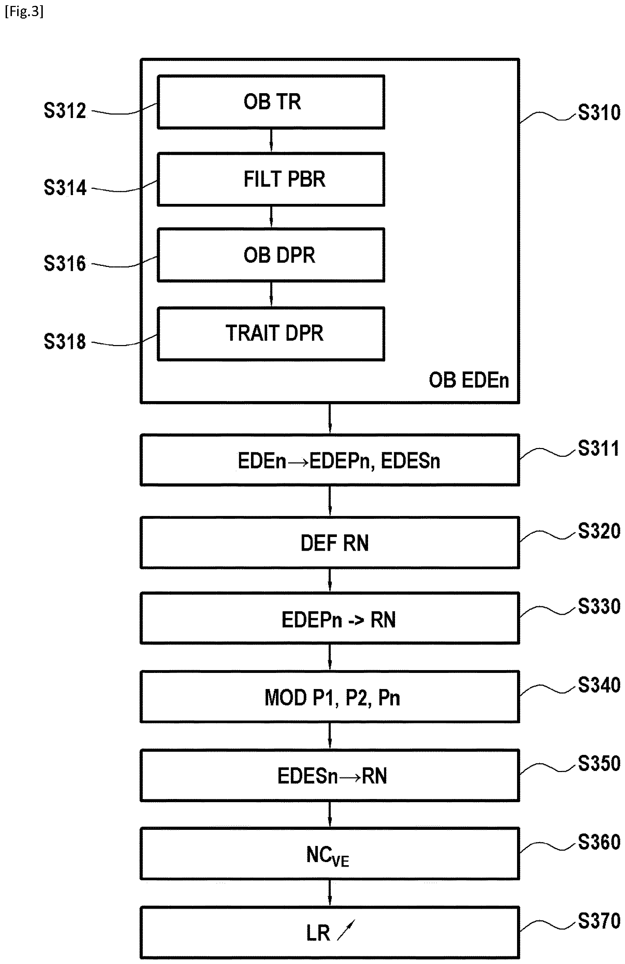

La **figure 1** représente, de manière schématique, un système d'entraînement 100 selon un exemple de mode de réalisation de l'invention, ledit système d'entraînement 100 étant apte à mettre en œuvre un procédé d'entraînement d'un réseau de neurones artificiels selon un exemple de mode de réalisation de l'invention, typiquement le procédé décrit ci-après en référence à la figure 3.

Le système d'entraînement 100 comprend un premier module d'obtention 110, un premier module d'application 120, et un module de modification 130.

Le premier module d'obtention 110 est configuré pour obtenir un ensemble de données d'entraînement primaire et un ensemble de données d'entraînement secondaire à partir d'une pluralité de paquets réseau, l'ensemble de ces données d'entraînement primaire et secondaire étant associé à un ensemble de valeurs cibles de propriétés décrivant un usage numérique cible.

En outre, le premier module d'application 120 est configuré pour appliquer l'ensemble de données d'entraînement primaire (pour réaliser un entraînement primaire) ou l'ensemble de données d'entraînement secondaire (pour réaliser un entraînement secondaire) à l'entrée du réseau de neurones artificiels, le réseau de neurones artificiels délivrant en sortie un score de prédiction pour chaque valeur de chaque propriété de la pluralité de propriétés décrivant chaque usage numérique.

De plus, le module de modification 130 est configuré pour modifier au moins un poids du réseau de neurones artificiels en fonction de l'ensemble de valeurs cibles de propriétés et des scores de prédictions obtenus par le premier module d'application 120.

Comme le montre la **figure 2**, le système d'entraînement 100 comprend notamment un processeur 200, une mémoire morte 202 (de type « ROM »), une mémoire non volatile réinscriptible 204 (de type « EEPROM » ou « Flash NAND » par exemple), une mémoire volatile réinscriptible 206 (de type « RAM »), et une interface de communication 208.

La mémoire morte 202 constitue un support d'enregistrement conforme à un exemple de mode de réalisation de l'invention, lisible par le processeur 200 et sur lequel est enregistré un premier programme d'ordinateur P1 conforme à un exemple de mode de réalisation de l'invention. En variante, le premier programme d'ordinateur P1 est stocké dans la mémoire non volatile réinscriptible 204.

Le premier programme d'ordinateur P1 permet au système d'entraînement 100 de mettre en œuvre un procédé d'entraînement conforme à l'invention.

Ce premier programme d'ordinateur P1 peut ainsi définir des modules fonctionnels et logiciels du système d'entraînement 100, configurés pour mettre en œuvre les étapes d'un procédé d'entraînement conforme à un exemple de mode de réalisation de l'invention. Ces modules fonctionnels s'appuient sur ou commandent les éléments matériels 200, 202, 204, 206 et 208 du système d'entraînement 100 cités précédemment. Ils peuvent comprendre notamment ici le premier module d'obtention 110, le premier module d'application 120 et le module de modification 130 précités.

Le système d'entraînement 100 peut être un terminal 100 (tel qu'une passerelle réseau) comprenant les éléments matériels 200, 202, 204, 206 et 208, ainsi que les modules 110, 120 et 130 précités. En variante, le système d'entraînement peut comprendre plusieurs entités présentant chacune l'architecture conventionnelle d'un ordinateur, telles qu'un terminal et un ou plusieurs serveurs, les modules 110, 120 et 130 précités étant alors répartis entre ces différentes entités.

La **figure 3** représente un procédé d'entraînement conforme à un exemple de mode de réalisation de l'invention. Ce procédé est mis en œuvre par un système d'entraînement conforme à un exemple de mode de réalisation de l'invention, tel que par exemple le système d'entraînement 100 décrit en référence aux figures 1 et 2.

Dans une étape S310, le premier module d'obtention 110 obtient un premier ensemble de données d'entraînement EDE1 à partir d'une pluralité de paquets réseau, ledit premier ensemble de données d'entraînement EDE1 étant associé à un premier ensemble de valeurs cibles de propriétés décrivant un premier usage numérique cible UNC1.

Dans le mode de réalisation décrit ici, la pluralité de premier ensemble de données d'entraînement EDE1 est destiné à être partitionné, au cours d'une étape S311, en :

- un premier ensemble de données d'entraînement primaire EDEP1 obtenu à partir d'un premier sous-ensemble de la pluraluté de paquets réseau ; et
- un premier ensemble de données d'entraînement secondaire EDES1 obtenu à partir d'un deuxième sous-ensemble de la pluralité de paquets réseau.

Comme cela sera décrit par la suite :-

- le premier ensemble de données d'entraînement primaire EDEP1 permet, lors d'un entraînement primaire, d'entraîner le réseau de neurones RN artificiel à identifier le premier usage numérique cible UNC1 ;
- le premier ensemble de données d'entraînement secondaire EDES1 permet, lors d'un entraînement secondaire (ou post entraînement) d'identifier des faiblesses du modèle entrainé lors du premier entraînement (c'est-à-dire les valeurs de propriété qui sont mal identifiées par ce modèle) et, en utilisant des données ciblées et un taux d'apprentissage adapté, de renforcer le modèle par un entrainement secondaire.

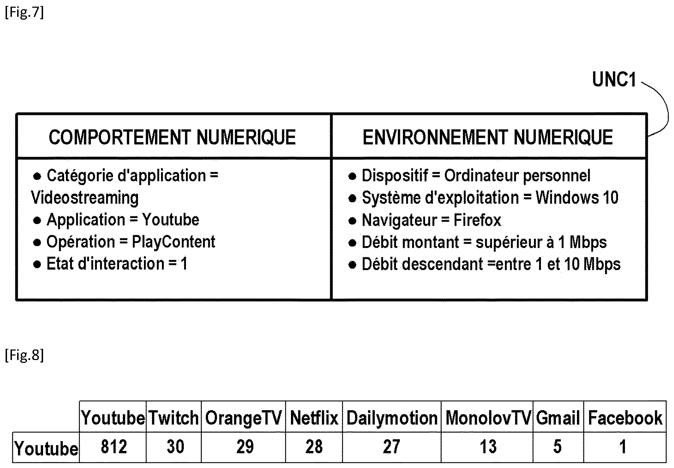

La **figure 7** illustre un exemple de premier ensemble de valeurs cibles de propriétés décrivant le premier usage numérique cible UNC1, ce premier ensemble comprenant les valeurs suivantes :

- la valeur « Videostreaming » pour la propriété « catégorie d'application utilisée »,
- la valeur « Youtube » pour la propriété « application utilisée »,
- la valeur « Playcontent » pour la propriété « opération mise en œuvre au niveau de l'application utilisée »,
- la valeur « 1 » pour la propriété « état d'interaction »,
- la valeur « ordinateur personnel » pour la propriété « dispositif utilisé »,
- la valeur « Windows 10 » pour la propriété « système d'exploitation utilisé »,
- la valeur « Firefox » pour la propriété « navigateur utilisé »,
- la valeur « supérieur à 1 Mbps » pour la propriété « débit montant », et
- la valeur « entre 1 et 10 Mbps » pour la propriété « débit descendant ».

Plus précisément, l'étape S310 comprend une étape S312 d'obtention d'une trace réseau TR comprenant une pluralité de paquets réseau.

La trace réseau TR est typiquement obtenue en utilisant un outil logiciel de capture permettant de capturer les paquets réseaux échangés par le terminal sur lequel est exécuté cet outil logiciel, par exemple l'outil logiciel TShark ou tcpdump.

Chaque paquet réseau obtenu comprend une pluralité de données réseau, telles que par exemple un numéro de paquet, une donnée temporelle d'envoi ou de réception du paquet (absolue ou relative, par rapport à un paquet de référence tel que le premier paquet capturé), une adresse IP de source du paquet (pour « Internet Protocol », en terminologie anglo-saxonne), une adresse IP de destination du paquet, une taille du paquet, un nom de protocole dans le paquet, etc.

Afin de mettre en œuvre le premier usage numérique cible UNC1, l'application utilisée associée au premier usage numérique cible est ouverte sur le terminal de sorte à être exécutée sur le terminal d'un testeur, puis la capture des paquets réseaux est lancée avec l'outil logiciel. Le terminal est le dispositif utilisé associé au premier usage numérique cible, ce terminal exécutant le système d'exploitation utilisé et, lorsque l'application utilisée est une application web, le navigateur utilisé associés au premier usage numérique cible UNC1.

Ainsi, dans l'exemple de premier usage numérique cible UNC1 de la figure 7, Youtube est ouvert dans le navigateur Firefox d'un ordinateur personnel ayant pour système d'exploitation Windows 10.

Ensuite, lorsque le premier usage numérique cible est associé à un état d'interaction de l'utilisateur indiquant que l'utilisateur interagit avec l'application associée au premier usage numérique cible UNC1 (cet état d'interaction étant ainsi typiquement égal à 1), l'opération associée au premier usage numérique cible UNC1 est exécutée.

Aussi, dans l'exemple de premier usage numérique cible UNC1 de la figure 7, la lecture d'une vidéo sur Youtube est lancée.

La capture des paquets réseaux est typiquement arrêtée lorsque tous les paquets réseaux associés à l'opération sont envoyés par le terminal ou reçus par le terminal. La capture est donc par exemple arrêtée lorsque les résultats de l'opération sont affichés par le terminal.

Pour une durée typiquement comprise entre 5 et 10 secondes de capture, la trace réseau TR obtenue comprend typiquement entre 100 et 100 paquets réseaux pour une opération de recherche du résultat d'un mot dans une barre de recherche (« BrowseKeywordSearch »), et comprend typiquement entre 2000 et 3000 paquets réseaux pour une opération de visionnage d'une vidéo (« PlayContent »).

Les paquets réseaux obtenus, qui constituent la trace réseau TR obtenue, sont alors enregistrés en association avec les valeurs de propriétés associées au premier usage numérique cible UNC1, typiquement dans la mémoire non volatile réinscriptible 204.

Les paquets réseaux obtenus sont ainsi étiquetés (les valeurs de propriétés étant appelées « labels », en terminologie anglo-saxonne).

Afin d'obtenir la valeur de la propriété « débit de connexion montant » et/ou la valeur de la propriété « débit de connexion descendant » associées au premier usage numérique cible UNC1, un outil logiciel peut être utilisé, tel que l'outil « Solarwinds Real-Time Bandwidth Monitor » ou « Okala speedtest », pendant l'étape S312 d'obtention de la trace réseau TR, cet outil logiciel étant ainsi utilisé en parallèle de l'outil logiciel de capture. Des fonctions du logiciel de capture peuvent permettre de déterminer le débit ou la latence de paquets au sein d'un flux par analyse de la trace capturée en fin de capture du flux.

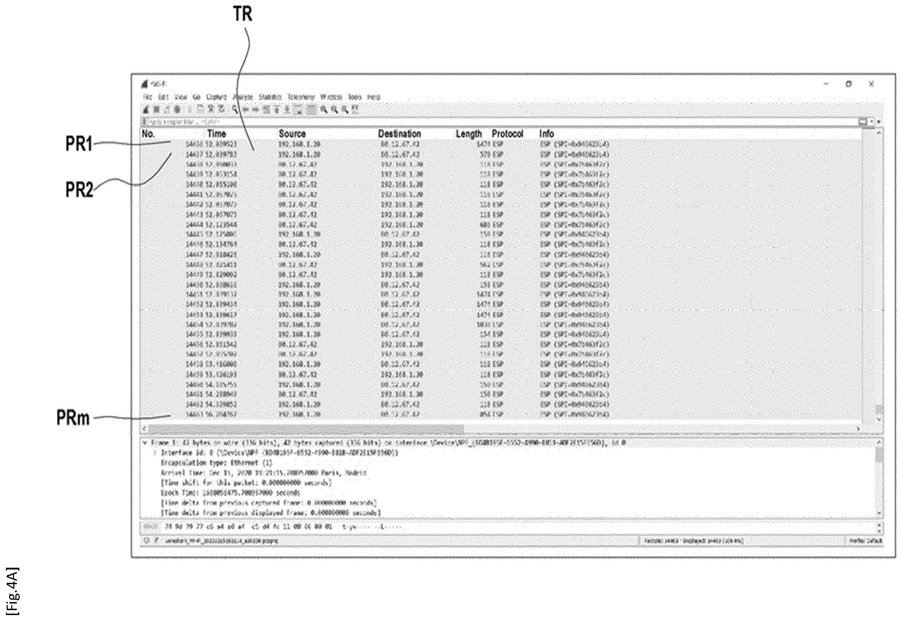

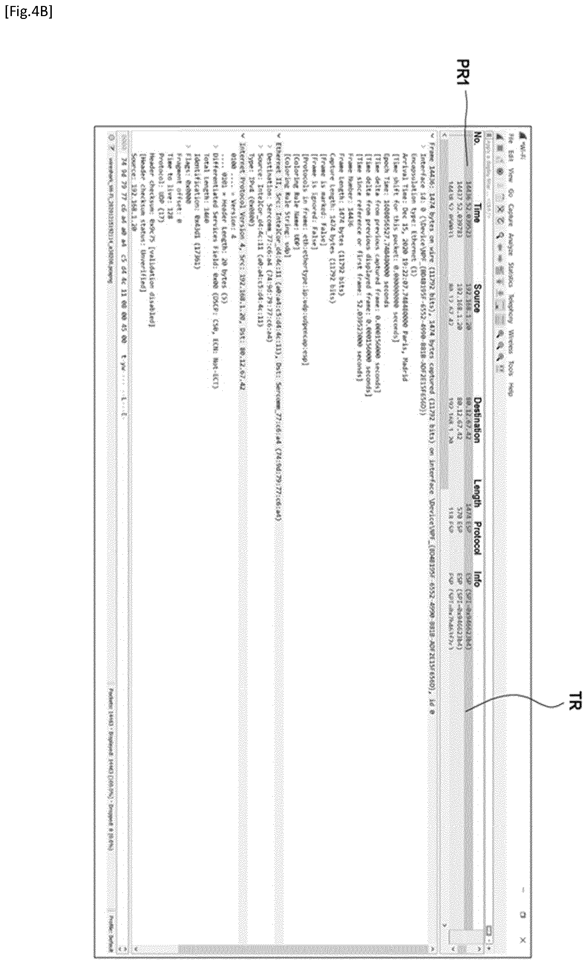

Les **figures 4A et 4B** montrent un exemple de trace réseau TR pouvant être obtenue à l'étape S312 d'obtention. La trace réseau TR comprend une pluralité de paquets réseau PR1-PRm. Chaque paquet réseau PR1-PRm comprenant une pluralité de données No. (numéro de paquet), Time (donnée temporelle d'envoi ou de réception du paquet), Source (adresse IP de source du paquet), Destination (adresse IP de destination du paquet), Length (taille mémoire du paquet), Protocol (nom de protocole dans le paquet), et Info (autres données du paquet).

De plus, lorsque le premier usage numérique cible UNC1 est associé à un état d'interaction de l'utilisateur indiquant que l'utilisateur interagit avec l'application associée au premier usage numérique cible UNC1 (cet état d'interaction étant ainsi typiquement égal à 1), il est utile de filtrer les paquets réseau dits de bruit de fond PRB, qui ne sont pas associés à une opération mise en œuvre par un utilisateur au niveau d'une application. L'étape S310 comprend alors typiquement une étape S314 de filtrage d'au moins un paquet réseau de bruit de fond PRB.

Lorsque le système d'exploitation utilisé est Linux, l'étape de filtrage est typiquement mise en œuvre pendant l'étape S312 d'obtention d'une trace réseau TR. Un outil logiciel de filtrage est lancé avant le lancement de l'outil logiciel de capture, de sorte à être exécuté pendant la capture des paquets réseau. L'outil logiciel de filtrage utilisé est par exemple Linux Network Namespace.

Lorsque le système d'exploitation utilisé n'est pas Linux (comme dans l'exemple de la figure 7), l'étape de filtrage est mise en œuvre après l'étape S312 et comprend typiquement une étape d'obtention d'une nouvelle trace réseau associée à un usage numérique pour lequel la propriété d'état d'interaction indique que l'utilisateur n'interagit pas (cet état d'interaction étant ainsi typiquement égal à 0). Cet usage numérique n'est pas associé à des propriétés décrivant un comportement numérique, et est typiquement uniquement associé aux propriétés dispositif utilisé, système d'exploitation utilisé, le navigateur utilisé et l'état d'interaction, le dispositif utilisé étant le terminal sur lequel l'outil logiciel de capture est exécuté et le même terminal permettant l'obtention de la trace réseau TR associé au premier usage numérique cible UNC1 à l'étape S310, le système d'exploitation et/ou le navigateur étant les mêmes que le système d'exploitation et/ou le navigateur permettant l'obtention de la trace réseau TR associé au premier usage numérique cible UNC1 (différent de linux) et l'état d'interaction étant typiquement égal à 0.

La capture des paquets réseau est lancée avec l'outil logiciel de capture, pendant une durée prédéterminée, typiquement comprise entre 10 et 100 heures.

Un triplé de données réseau est ensuite extrait de chaque paquet obtenu, ledit triplé de données comprenant par exemple l'adresse IP source du paquet, l'adresse IP destination du paquet et le protocole de plus haut niveau dans le paquet. Un ensemble de triplés de données réseau est ainsi obtenu.

Chaque paquet de la trace réseau TR associé au premier usage numérique cible UNC1 obtenu à l'étape S312 comprenant un des triplés de données de l'ensemble de triplés de données obtenu est ensuite supprimé, ce paquet étant un paquet réseau de bruit de fond PRB.

L'étape S310 comprend, pour chaque paquet réseau d'un sous ensemble de paquets réseau de la trace réseau TR obtenue à l'étape S312, une étape S316 d'obtention d'un ensemble de données du paquet réseau DPR, ces données DPR étant ensuite destinées à être divisées (à l'étape S311) en deux sousparties utilisées respectivement pour fournir les entrées du réseau de neurones RN artificiels lors de l'entraînement primaire et lors de l'entraînement secondaire.

Le sous ensemble de paquets réseau comprend typiquement un nombre P de premiers paquets réseau reçus et/ou envoyés de la trace réseau TR, et éventuellement n'ayant pas été filtrés à l'étape S314, typiquement les deux cents premiers paquets réseau PR, les données de cent paquets étant destinées à être utilisées pour l'entraînement primaire et les données de cent autres paquets étant destinées à être utilisées pour l'entraînement secondaire. Cette valeur de cent paquets réseau permettant un bon compromis entre temps de calcul et précision de l'identification.

Les données DPR de l'ensemble de données du paquet réseau DPR sont typiquement sélectionnées de sorte à améliorer la fiabilité et la précision de l'identification de l'usage numérique (par exemple parce qu'elles ne dépendent pas de la localisation ou du moment de l'usage) et/ou protéger la vie privée des utilisateurs.

L'ensemble de données du paquet réseau DPR comprend plusieurs données DPR parmi les données suivantes, typiquement les toutes les données suivantes :

- la taille du paquet,
- une durée entre la réception ou l'envoi du paquet et la réception ou l'envoi d'un paquet précédent d'une même session ou d'un même protocole que ledit paquet,
- un port source du paquet,
- un port destination du paquet,
- une direction du paquet, i.e. si le paquet est reçu ou envoyé, et
- un protocole d'une couche de plus haut niveau dans le paquet.

Le paquet comprend les données de taille, port source, port destination et de protocole de plus haut niveau, et ces données peuvent ainsi être directement extraites du paquet.

La donnée de direction du paquet est typiquement obtenue à partir de l'adresse MAC de source ou de destination. En effet, lorsque le paquet est reçu (paquet entrant), l'adresse MAC de destination est l'adresse MAC du dispositif utilisé, et lorsque le paquet est envoyé (paquet sortant), l'adresse MAC source du paquet est l'adresse MAC du dispositif utilisé.

La donnée de durée est typiquement calculée en fonction de la donnée temporelle d'envoi ou de réception du paquet. Lorsque le paquet appartient à une session (typiquement une session TCP ou UDP), le paquet précédent de la même session est identifié est la donnée de durée du paquet est soustraite à la donnée de durée du paquet précédent. Lorsque le paquet n'appartient pas à une session, le paquet précédent de même protocole et n'appartenant pas à une session est identifié, et la donnée de durée du paquet est soustraite à la donnée de durée de ce paquet précédent.

L'étape S310 comprend en outre une étape S318 de traitement des ensembles de données de paquets réseau DPR obtenus à l'étape S316, de sorte à obtenir le premier ensemble de données d'entraînement EDE1.

L'étape S318 comprend, pour chaque donnée DPR de chaque ensemble de données du paquet réseau DPR ayant pour valeur un nom (i.e. prenant la forme d'une variable catégorielle), une conversion de la valeur de ladite donnée DPR en un vecteur de valeurs binaires (variables binaires).

Une variable catégorielle prend typiquement la forme d'une chaîne de caractères comprenant des lettres et/ou des chiffres, dont la valeur est un nom. Par exemple, le numéro d'un port est une variable catégorielle, le numéro nommant (référençant) le port mais n'impliquant pas une relation de supériorité par rapport à un numéro de port plus petit.

Le vecteur comprend un nombre de valeurs binaire égal au nombre de valeurs que peut prendre ladite donnée DPR, chaque valeur binaire correspondant à une des valeurs de nom, et étant mise à 1 pour la valeur de nom effectivement prise par la donnée, et à 0 pour les autres (technique dite d'encodage « one-hot »). Cette conversion est typiquement mise en œuvre pour les données de port source, port destination et protocole de plus haut niveau.

En variante, une autre méthode de binarisation peut être utilisé, telle que par exemple une des méthodes appelées « simple coding », « deviation coding », « orthogonal polynomial coding », « Helmert coding », « reverse Helmert coding », forward différence coding » ,« backward différence coding » et « userdefined coding », en terminologie anglo-saxonne, par exemple décrites sur la page web https://stats.idre.ucla.edu/r/library/r-library-contrast-coding-systems-for-categorical-variables/.

En outre, l'étape S318 comprend, par exemple, pour chaque donnée DPR de chaque ensemble de données du paquet réseau DPR ayant une valeur numérique définie dans un intervalle différent de l'intervalle compris entre 0 et 1, normalisation de la valeur de sorte qu'elle soit définie dans l'intervalle compris entre 0 et 1. Toutes les données DPR sont alors à la même échelle, ce qui permet d'accélérer l'entraînement du réseau de neurones RN artificiels. La normalisation est typiquement mise en œuvre pour les données de taille et de durée.

La méthode appelée « min-max normalisation » est par exemple utilisée pour la normalisation, la formule utilisée étant alors :

[Math. 1]

$$x' = \frac{x - \min(x)}{\max(x) - \min(x)}$$

où x représente la valeur à normaliser, x' représente la valeur normalisée, max(x) représente la valeur maximale que peut prendre la valeur à normaliser et min(x) représente la valeur minimale que peut prendre la valeur à normaliser.

Dans le mode de réalisation décrit ici, le premier ensemble de données d'entraînement EDE1 est divisé en deux ensembles, à l'étape S311, à savoir un premier ensemble de données d'entraînement primaire EDEP1 et un premier ensemble de données d'entraînement secondaire (ou post-entraînement) EDES1. Chacun de ces premiers ensembles représente par exemple 50% du premier ensemble de données d'entraînement EDE1.

Dans une étape S320, la structure du réseau de neurones RN artificiel est définie.

La structure utilisée pour définir le réseau de neurones est par exemple la structure appelée « réseau de neurones à propagation avant ». Le réseau de neurones comprend une couche d'entrée, une couche de sortie et un ou plusieurs couches cachées, chaque couche comprenant une pluralité de neurones, aussi appelés neurones.

En outre, chaque couche cachée, ainsi que la couche de sortie, sont chacune associées à une opération mathématique, aussi appelée fonction d'activation, réalisée au niveau de chaque neurone de ladite couche.

De plus, chaque neurone d'une couche cachée et de la couche de sortie est « relié » à chaque neurone de la couche précédente par un poids, chaque neurone prenant ainsi en entrée le résultat (ou la valeur, pour la couche d'entrée) de chaque neurone de la couche précédente multiplié par le poids associé, i.e. le poids liant ledit neurone audit neurone de la couche précédente.

Le nombre de couches est typiquement défini à l'étape S320, ainsi que les fonctions d'activation et le nombre de neurones des couches cachées et de sortie.

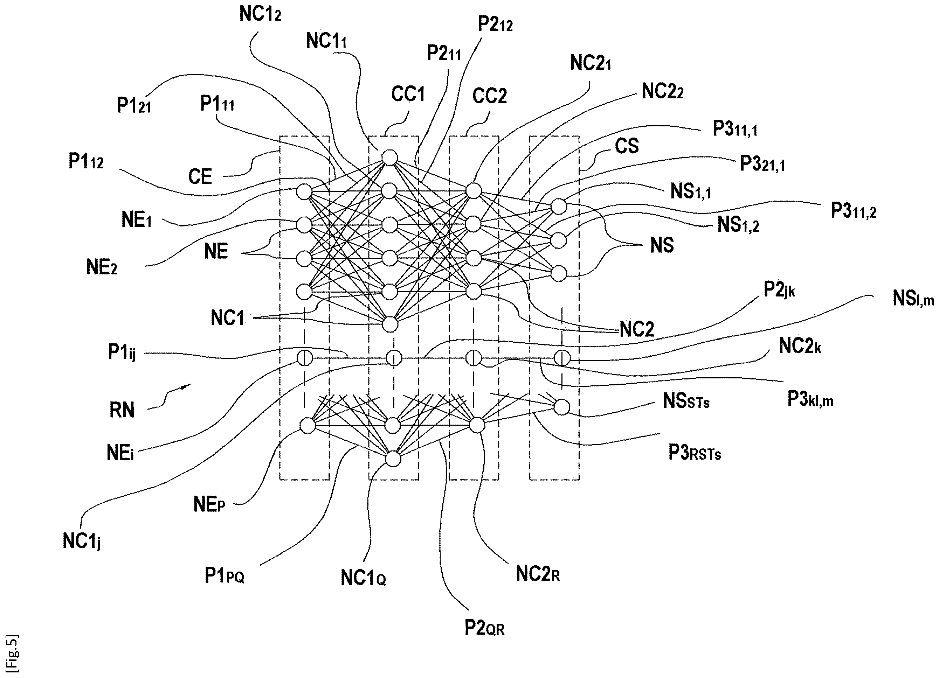

Le réseau de neurones RN artificiels défini comprend typiquement 4 couches de neurones artificiels, une couche d'entrée CE, une couche de sortie CS, une première couche cachée CC1 et une deuxième couche cachée CC2, la première couche cachée CC1 étant positionnée entre la couche d'entrée CE et la deuxième couche cachée CC2, et la deuxième couche cachée CC2 étant positionnée entre la première couche cachée CC1 et la couche de sortie CS. La **figure** 5 représente schématiquement un exemple d'un tel réseau de neurones RN artificiels.

Chaque couche CE, CC1, CC2 et CS comprend une pluralité de neurones NE, NC1, NC2, NS (neurones). De plus, la première couche cachée CC1, la deuxième couche cachée CC2 et la couche de sortie CS sont chacune associées à une opération mathématique.

La première opération mathématique (ou première fonction d'activation) associée à la première couche intermédiaire CC1 est réalisée au niveau de chaque neurone NC1 de la première couche intermédiaire CC1, chaque opération mathématique au niveau d'un neurone NC1 étant réalisée en fonction de chaque valeur de chaque neurone d'entrée NE, chacune de ses valeurs étant pondérée par un poids P1, pouvant différer d'une valeur à l'autre. L'ensemble des poids P1 affectés aux valeurs des neurones d'entrée NE est typiquement initialisé au hasard.

La première opération mathématique réalisée est typiquement l'application de la fonction tangente hyperbolique à la somme de chaque valeur pondérée de chaque neurone d'entrée NE, la fonction tangente hyperbolique étant notée tanh, et pouvant être définie par la formule mathématique suivante, pour le neurone $NC1_j$ de la première couche cachée CC1, j appartenant à l'intervalle [1, Q], où Q est le nombre de neurones de la première couche cachée CC1, par exemple égal à 2500 :

[Math. 2]

$$tanh(y_j) = \frac{e^{y_j} - e^{-y_j}}{e^{y_j} + e^{-y_j}}$$

où $y_j$ représente la somme des valeurs pondérées des neurones d'entrée NE, avec :

[Math. 3]

$$y_j = \sum_{i=1}^{P} NE_i \times P1_{ij}$$

où i appartient à l'intervalle [1, P], P étant le nombre de neurones de la couche d'entrée CE, $P1_{ij}$ étant ainsi le poids P1 liant le neurone $NE_i$ de la couche d'entrée au neurone $NC1_j$ de la première couche cachée CC1.

De plus, la deuxième opération mathématique (ou deuxième fonction d'activation) associée à la deuxième couche intermédiaire CC2 est réalisée au niveau de chaque neurone NC2 de la deuxième couche intermédiaire CC2, chaque opération mathématique au niveau d'un neurone NC2 étant réalisée en fonction du résultat de chaque première opération effectuée au niveau de chaque neurone NC1 de la première couche intermédiaire CC1, chacun de ses résultats étant pondéré par un poids P2, pouvant différer d'une valeur à l'autre. L'ensemble des poids P2 affectés aux résultats des neurones NC1 de la première couche cachée CC1 est typiquement initialisé au hasard.

La deuxième opération mathématique réalisée est typiquement l'application de la fonction Unité Linéaire Rectifiée à la somme de chaque résultat pondéré de chaque neurone NC1 de la première couche intermédiaire CC1, la fonction Unité Linéaire Rectifiée étant notée ReLu (pour Rectified Linear Unit, en terminologie anglo-saxonne), et pouvant être définie par la formule mathématique suivante, pour le neurone $NC2_k$ de la deuxième couche cachée CC2, k appartenant à l'intervalle [1, R], où R est le nombre de neurones de la première couche cachée, par exemple égal à 750 :

[Math. 4]

$$ReLu(z_k) = max(0, z_k)$$

où $z_k$ représente la somme des résultats pondérés des neurones NC1 de la première couche intermédiaire CC1, avec :

[Math. 5]

$$z_k = \sum_{j=1}^{Q} tanh(y_j) \times P2_{jk}$$

où j appartient à l'intervalle [1, Q], Q étant le nombre de neurones de la première couche cachée CC1, $P2_{jk}$ étant ainsi le poids P2 liant le neurone $NC1_j$ de la première couche cachée CC1 au neurone $NC2_k$ de la deuxième couche cachée CC2.

En outre, la troisième opération mathématique (ou troisième fonction d'activation) associée à la couche de sortie CS est réalisée au niveau de chaque neurone NS de la couche de sortie CS, chaque opération mathématique au niveau d'un neurone NS étant réalisée en fonction du résultat de chaque deuxième opération effectuée au niveau de chaque neurone NC2 de la deuxième couche intermédiaire CC2, chacun de ses résultats étant pondéré par un poids P3, pouvant différer d'une valeur à l'autre. L'ensemble des poids P3 affectés aux résultats des neurones NC2 de la deuxième couche intermédiaire CC2 est typiquement initialisé au hasard.

Le résultat de chaque troisième opération mathématique effectuée au niveau d'un neurone NS de la couche de sortie CS correspond à un score de prédiction d'une valeur d'une propriété de la pluralité de propriétés décrivant chaque usage numérique de l'ensemble d'usages numériques. Un taux de probabilité est ainsi associé à chaque valeur de chaque propriété de la pluralité de propriété en sortie du réseau de neurones artificiels, et ainsi typiquement à chaque valeur de catégorie d'application utilisée, d'application utilisée, d'opération mise en œuvre au niveau de l'application, d'état d'interaction de l'utilisateur, de dispositif utilisé, de système d'exploitation utilisé et, lorsque l'application est une application web, de navigateur utilisé.

La troisième opération mathématique est typiquement l'application de la fonction softmax, appelée aussi fonction exponentielle normalisée, à la somme des résultats pondérés des neurones NC2 de la deuxième couche intermédiaire CC2, la fonction softmax étant définie par la formule suivante, pour le neurone $NS_{l,m}$, où I appartient à l'intervalle [1, S], où S est le nombre de propriétés de la pluralité de propriétés dont les valeurs décrivent les usages numériques, et $m \in [1, T_l]$, où $T_l$ est le nombre de valeurs que peut prendre la propriété I, le neurone $NS_{l,m}$ étant ainsi le neurone associé à la valeur m de la propriété I :

[Math. 6]

$$\sigma(b)_{l,m} = \frac{e^{b_{l,m}}}{\sum_{n=1}^{T_l} e^{b_{l,n}}}$$

où $b_{l,m}$ représente la somme des résultats pondérés des neurones NC2 de la deuxième couche intermédiaire CC2, avec :

[Math. 7]

$$b_{l,m} = \sum_{k=1}^{R} ReLu(z_k) \times P3_{kl,m}$$

où k appartient à l'intervalle [1, R], R étant le nombre de neurones NC2 de la deuxième couche cachée CC2, $P3_{kl,m}$ étant ainsi le poids P3 liant le neurone $NC2_k$ de la deuxième couche cachée CC2 au neurone $NS_{l,m}$ de la couche de sortie CS.

Nous allons maintenant décrire, un exemple d'entraînement primaire pouvant être mis en œuvre dans un mode de réalisation de l'invention.

Cet entraînement primaire est effectué en utilisant le premier ensemble de données d'entraînement primaire EDEP1 obtenu à l'étape S311.

Dans le mode de réalisation décrit ici, le premier ensemble de données d'entraînement primaire EDEP1 est divisé en 3 sous-ensembles, à savoir :

- un premier sous-ensemble $EDEP1_E$ pour l'entraînement primaire à proprement parler ;
- un deuxième sous-ensemble $EDEP1_V$ pour valider l'entraînement primaire ; et
- un troisième sous-ensemble $EDEP1_T$ pour tester l'entraînement primaire.

Dans le mode de réalisation décrit ici, les premier, deuxième et troisième sous-ensembles $EDEP1_E$, $EDEP1_V$, $EDEP1_T$ représentent environ 80%, 10% et 10% du premier ensemble de données d'entraînement primaire EDEP1.

Dans une étape S330, le premier sous-ensemble du premier ensemble de données d'entraînement primaire $EDEP1_E$ est appliqué, par le premier module d'application 120, à l'entrée CE du réseau de neurones RN artificiels.

Plus précisément, chaque donnée d'entraînement du premier sous-ensemble du premier ensemble de données d'entraînement primaire $EDEP1_E$ correspond à un ou plusieurs neurones NE de la couche d'entrée CE. Lorsque la valeur de la donnée d'entraînement prend la forme d'un vecteur de valeurs binaires, le nombre de neurones NE de la couche d'entrée CE correspondant à ladite donnée d'entraînement est égal au nombre de valeurs binaires du vecteur, et chaque neurone NE prend alors la valeur d'une des valeurs binaires du vecteur. Lorsque la donnée d'entraînement comprend une unique valeur, un unique neurone NE de la couche d'entrée CE correspond à la donnée d'entraînement, et prend ainsi la valeur de la donnée d'entraînement.

Le nombre de neurones NE de la couche d'entrée CE est ainsi supérieur ou égal au nombre de données d'entraînement du premier ensemble de données d'entraînement EDE1.

Les première, deuxième et troisième opérations mathématiques sont alors appliquées en utilisant le premier sous-ensemble du premier ensemble de données d'entraînement primaire EDEP1$_E$, respectivement dans la première couche cachée CC1, la deuxième couche cachée CC2 et la couche de sortie CS.

Le réseau de neurones RN artificiels délivre alors en sortie un score de prédiction pour chaque valeur de chaque propriété de la pluralité de propriétés décrivant chaque usage numérique.

Dans une étape S340, au moins un poids P1, P2 ou P3 du réseau de neurones NR artificiels est modifié, par le module de modification 130, en fonction du premier ensemble de valeurs cibles de propriété et des scores de prédictions obtenus à l'étape S330.

Le ou les poids P1, P2, P3 sont typiquement modifiés selon une méthode de rétropropagation du gradient.

Plus précisément, comme indiqué précédemment, chaque valeur de chaque propriété de la pluralité de propriétés décrivant l'usage numérique est associée à un neurone NS différent de la couche de sortie CS, le neurone délivrant un score de prédiction pour cette valeur.

Le premier ensemble de valeurs cibles de propriétés décrivant le premier usage numérique cible UNC1 permet d'attribuer à chaque neurone NS de la couche de sortie CS un score attendu, le score étant élevé pour chaque neurone NS associé à une valeur cible du premier ensemble de valeurs cibles (par exemple 100%) et étant moins élevé pour chaque neurone NS associé à une autre valeur qu'une valeur cible (par exemple 0%).

Chaque score de prédiction délivré par un neurone NS de la couche de sortie CS est ainsi comparé à la valeur attendue associée audit neurone NS, la différence EP entre le score de prédiction et la valeur attendue (appelée erreur EP associée audit neurone NS) étant ensuite utilisée pour modifier chaque poids liant ledit neurone à un neurone NC2 de la deuxième couche cachée CC2. La formule suivante pour calculer la nouvelle valeur du poids P3$_{kl,m}$+1 liant le neurone NC2$_k$ de la deuxième couche cachée CC2 au neurone NS$_{l,m}$ de la couche de sortie CS est typiquement utilisée :

[Math. 8]

$$P3_{kl,m} + 1 = P3_{kl,m} - LR \frac{\partial(EP_{l,m}^2)}{\partial(P3_{kl,m})}$$

où P3$_{kl,m}$ est la valeur courante du poids liant le neurone NC2$_k$ de la deuxième couche cachée CC2 au neurone NS$_{l,m}$ de la couche de sortie CS, LR est une constante égale à 0.01 représentatif d'un taux d'apprentissage (en anglais « learning rate »), et EP$_{l,m}$ est la différence EP entre le score de prédiction et la valeur attendue du neurone NS$_{l,m}$ de la couche de sortie CS.

Afin de calculer les poids P2 liants les neurones NC2 de la deuxième couche cachée CC2 aux neurones NC1 de la première couche cachée CC1, la contribution totale de chaque neurone NC2 de la deuxième couche cachée CC2 aux erreurs associées aux neurones NS de la couche de sortie CS est calculée.

La contribution totale CT2$_k$ du neurone NC2$_k$ aux erreurs associées aux neurones NS de la couche de sortie CS est typiquement calculée au moyen de la formule suivante :

[Math. 9]

$$CT2_k = \sum_{l=1}^{S} \sum_{m=1}^{T_S} ct2_{kl,m}$$

où ct2$_{kl,m}$ est la contribution du neurone NC2$_k$ de la deuxième couche cachée CC2 à l'erreur associée au neurone NS$_{l,m}$ de la couche de sortie CS, typiquement calculé selon la formule suivante :

[Math. 10]

$$ct2_{kl,m} = \frac{P3_{kl,m}}{\sum_{k=1}^{R} P3_{kl,m}} \times EP_{l,m}$$

où $P3_{kl,m}$ est le poids P3 liant le neurone $NC2_k$ de la deuxième couche cachée CC2 au neurone $NS_{l,m}$ de la couche de sortie CS et $EP_{l,m}$ est la différence EP entre le score de prédiction et la valeur attendue du neurone $NS_{l,m}$ de la couche de sortie CS.

La formule suivante pour calculer la nouvelle valeur du poids $P2_{jk}+1$ liant le neurone $NC1_j$ de la première couche cachée CC1 au neurone $NC2_k$ de la deuxième couche cachée CC2 peut alors être utilisée :

[Math. 11]

$$P2_{jk} + 1 = P2_{jk} - LR\ \frac{\partial(CT2_k^2)}{\partial(P2_{jk})}$$

où $P2_{jk}$ est la valeur courante du liant le neurone $NC1_j$ de la première couche cachée CC1 au neurone $NC2_k$ de la deuxième couche cachée CC2, LR est une constante correspondant à un taux d'apprentissage égale à 0.01, et $CT2_k$ est la contribution totale du neurone $NC2_k$ aux erreurs associées aux neurones NS de la couche de sortie.

Les poids P1 liants les neurones NC1 de la première couche cachée CC1 aux neurones NE de la couche d'entrée CE sont calculés de la même manière que les poids P2 liants les neurones NC2 de la deuxième couche cachée CC2 aux neurones NC1 de la première couche cachée CC1.

L'entraînement primaire utilise ainsi typiquement un apprentissage multitâche avec un réseau de neurones RN délivrant un score de prédiction pour chaque valeur de chaque propriété et l'utilisation de la méthode de rétropropagation du gradient.

La mise en œuvre des étapes d'obtention S311 d'obtention du premier sous-ensemble du premier ensemble de données d'entraînement primaire $EDEP1_E$, d'application S330 et de modification S340 correspondent à une itération de l'entraînement primaire du réseau de neurones NR artificiels. Ces étapes d'obtention S311, d'application S330 et de modification S340 sont typiquement réitérées une ou plusieurs fois, chaque itération de ces étapes S330 et S340 utilisant le réseau de neurones RN comprenant les poids modifiés à l'étape S340 de modification de l'itération précédente.

Au cours de cet entraînement primaire, le réseau de neurones NR est entraîné dans le but que pour chaque propriété, il associe un score de prédiction associé à la valeur cible de la propriété (du premier ensemble de valeurs cibles de propriétés) supérieur au score de prédiction des autres valeurs de la même propriété.

Au cours de cet entraînement primaire, les étapes d'obtention S311 d'obtention d'un premier sous-ensemble du premier ensemble de données d'entraînement primaire $EDEP1_E$, d'application S330 de ces données d'entraînement primaire et de modification S340 d'au moins un poids peuvent être réitérées une ou plusieurs fois pour le premier usage numérique cible UNC1. Plusieurs traces réseau peuvent ainsi être obtenues pour le premier usage numérique cible UNC1 puis être utilisées pour entraîner le réseau de neurones NR artificiels.

De plus, au cours de cet entraînement primaire, les étapes d'obtention S311 d'un premier sous-ensemble de données d'entraînement primaire $EDEP1_E$, d'application S330 de ces données d'entraînement et de modification S340 d'au moins un poids peuvent être réitérées une ou plusieurs fois pour chaque usage numérique de l'ensemble d'usages numériques, le premier module d'obtention 110 obtenant alors un nième sous-ensemble de données d'entraînement primaires $EDEPn_E$ qui est appliqué par le premier module d'application 120 à l'entrée CE du réseau de neurones RN artificiels, et le module de modification 130 modifiant un ou plusieurs poids du réseau de neurones RN en fonction du nième ensemble de valeurs cibles de propriétés correspondant au nième usage numérique et des scores de prédictions obtenus à cette itération de l'étape S330.

Lorsqu'une ou plusieurs traces réseau associées à un usage numérique pour lequel la propriété d'état d'interaction indique que l'utilisateur n'interagit pas sont obtenues à une ou plusieurs itérations de l'étape S314, chaque trace réseau peut aussi être utilisée dans une nouvelle itération des étapes d'application S330 et de modification S340.

Au cours de cet entraînement primaire, après la mise en œuvre des étapes d'obtention S311, d'application S330 et de modification S340 pour le premier usage numérique, ces étapes S311, S330 et S340 sont typiquement réitérées pour chaque autre usage numérique de l'ensemble d'usages numériques, les poids P1, P2, P3 du réseau de neurones RN étant modifiés à chaque itération et les poids ainsi modifiés étant utilisés à l'itération suivante.

La mise en œuvre des étapes d'obtention S311, d'application S330 et de modification S340 pour chaque usage numérique de l'ensemble d'usages numériques est appelée cycle d'apprentissage complet ou encore époque.

Toutes les itérations des étapes d'obtention S311 peuvent être mises en œuvre avant la mise en œuvre de l'étape S330 d'application pour le premier usage numérique.

L'étape d'obtention peut en outre être mise en œuvre une ou plusieurs nouvelles fois pour chaque usage numérique de la pluralité d'usages numériques afin d'obtenir un ou plusieurs autres ensembles de données d'entraînement pour chaque usage numérique de la pluralité d'usages numériques, typiquement avant la mise en œuvre de l'étape S330 d'application pour le premier usage numérique. Les ensembles de données obtenus sont typiquement utilisés lors d'une validation ou d'un autre cycle d'apprentissage complet.

Suite à la mise en œuvre d'une époque, une validation de l'entraînement primaire peut être réalisée en mettant en œuvre les étapes d'application S330 et de modification S340 pour chaque usage numérique de l'ensemble d'usages numériques, à partir du deuxième sous-ensemble $EDEP1_V$ du premier ensemble de données d'entraînement primaire pour chaque usage numérique obtenus à des itérations de l'étape S310 et n'ayant pas encore été utilisés. Cette validation permet d'évaluer la précision de l'identification par le réseau de neurones NR.

Plus précisément, si, à la fin de la validation, la précision de l'identification (de la prédiction) n'augmente pas, l'entraînement primaire est arrêté. Dans le cas contraire, un nouveau cycle d'apprentissage complet et une nouvelle validation sont réalisés, et ainsi de suite jusqu'à ce que la précision de l'identification n'augmente pas.

Un test final peut ensuite être réalisé en mettant en œuvre les étapes d'application S330 et de modification S340 pour chaque usage numérique de l'ensemble d'usages numériques, à partir du troisième sous-ensemble $EDEP1_T$ du premier ensemble de données d'entraînement primaire pour chaque usage numérique obtenus à des itérations de l'étape S310 et n'ayant pas encore été utilisés.

Une fois l'entraînement primaire terminé, un entraînement secondaire (ou post-entraînement) est mis en œuvre afin de détecter des faiblesses du modèle entrainé lors de l'entraînement primaire et, de renforcer ce modèle en utilisant des données ciblées et un taux d'apprentissage adapté.

Cet entraînement secondaire va maintenant être décrit.

Cet entraînement secondaire est effectué en utilisant le premier ensemble de données d'entraînement secondaire EDES1 obtenu à l'étape S311.

Dans le mode de réalisation décrit ici, le premier ensemble de données d'entraînement secondaire EDES1 est divisé en 3 sous-ensembles, à savoir :

- un premier sous-ensemble $EDES1_E$ pour l'entraînement secondaire à proprement parler ;
- un deuxième sous-ensemble $EDES1_V$ pour valider l'entraînement secondaire ; et
- un troisième sous-ensemble $EDES1_T$ pour tester l'entraînement secondaire.

Dans le mode de réalisation décrit ici, les premier, deuxième et troisième sous-ensembles $EDES1_E$, $EDES1_V$, $EDES1_T$ représentent environ 80%, 10% et 10% du premier ensemble de données d'entraînement secondaire EDES1.

Cet entraînement secondaire peut être réalisé pour au moins une valeur cible VC d'une propriété cible PC.

Au cours d'une étape S350, on extrait du premier sous-ensemble $EDES1_E$, un sous-ensemble $EDES1_{E, VC}$ de données associées à un usage dont la propriété PC a cette valeur cible VC.

Les données du sous-ensemble $EDES1_{E, VC}$ sont appliquées, par le premier module d'application 120, à l'entrée CE du réseau de neurones RN artificiels entraîné par l'entraînement primaire pour identifier la valeur VE estimée de la propriété PC d'un usage numérique estimé UNE pour chacune de ces données.

Cet valeur estimée VE est identifiée an associant à cette valeur VE la valeur de la propriété PC ayant le score de prédiction le plus grand parmi les scores de prédiction des autres valeurs de la même propriété PC.

Cette étape S350 permet ainsi d'évaluer la précision du modèle du réseau de neurones RN pour la valeur cible VC à l'issue de l'entraînement primaire.

Les résultats de cette étape S350 peuvent être regroupés dans une matrice de confusion MC dont chaque ligne correspond à une valeur cible VC et chaque colonne une valeur estimée VE par le réseau de neurones pour la propriété cible PC de cette valeur cible VC.

Un exemple d'une ligne d'une telle matrice de confusion est représenté à la figure 8 pour la valeur cible « Youtube » de la propriété cible « Application ». Dans cet exemple, on a classifié 1000 échantillons de flux de Youtube, et le résultat de matrice de confusion MC pour la valeur cible « Youtube » après l'evaluation est :

- 812 fois la valeur estimée Youtube (correctement classée),
- 30 fois la valeur estimée Twitch (mal classée),
- 29 fois la valeur estimée OrangeTV (mal classée),
- 28 fois la valeur estimée Netflix (mal classée),
- 27 fois la valeur estimée Dailymotion (mal classée),
- 13 fois la valeur estimée MonolovTV (mal classée),
- 5 fois la valeur estimée Gmail (mal classée), et
- 1 fois la valeur estimée Facebook (mal classée).

Dans le mode de réalisation décrit ici, le procédé d'entraînement comporte une étape S360 permettant d'obtenir, pour chaque valeur cible VC d'une propriété cible, un nombre de confusions $NC_{VE}$ correspondant au nombre de fois où une même valeur estimée VE de ladite propriété cible PC est différente de la valeur cible VC.

Ainsi dans l'exemple de la figure 8, pour la valeur cible « Youtube » de la propriété « Application », l'étape S360 obtient :

- 30 confusions avec la valeur estimée « Twitch » ;
- 29 confusions avec la valeur estimée « OrangeTV » ;
- 28 confusions avec la valeur estimée « Netflix » ;
- 27 confusions avec la valeur estimée « DailyMotion » ;
- 13 confusions avec la valeur estimée « MonolovTV » ;
- 5 confusions avec la valeur estimée « Gmail » ;
- 1 confusion avec la valeur estimée « Facebook ».

Dans le mode de réalisation décrit ici, au cours d'une étape S370, on détermine, pour au moins une valeur cible VC (par exemple « Youtube »), un nombre déterminé (par exemple 5) de valeurs d'intérêt VI correspondant aux valeurs estimées VE les plus mal classées, autrement dit celles pour lesquelles le nombre de confusions est le plus important.

Dans l'exemple décrit ici, les valeurs d'intérêt pour la valeur cible « Youtube » sont les valeurs d'intérêt « Twitch », « Orange TV », « Netflix », « DailyMotion » et « MonolovTV ».

Dans le mode de réalisation décrit ici, au cours d'une étape S370, les taux LR d'apprentissage associés aux neurones de sortie ND du réseau de neurones RN associés aux valeurs d'intérêt VI sont augmentés.

Dans le mode de réalisation décrit ici, cette augmentation consiste à augmenter le paramètre LR des équations Math8 et Math11 pour ces neurones de sortie.

Par exemple, les taux d'apprentissage sont multipliés par 5. Ils passent alors à 0.05, les taux d'apprentissage des autres neurones de sortie restant inchangés et égaux à 0.01.

La modification du taux d'apprentissage d'un neurone d'un réseau de neurones est connue de l'homme du métier. Elle peut notamment être effectués en passant ces taux d'apprentissage modifiés LR comme paramètres de la méthode de rétropropagation mise en œuvre dans l'entraînement secondaire.

Dans le mode de réalisation décrit ici, l'entraînement secondaire diffère de l'entraînement primaire :

- dans le choix de données d'entrée, celles-ci étant associées à une valeur de propriété choisie ;
- dans l'augmentation des taux d'apprentissage LR associés aux valeurs d'intérêt pour cette valeur cible.

Au cours de cet entraînement secondaire, le réseau de neurones NR peut être entraîné dans le but de détecter les erreurs de prédiction de chaque valeur de propriété et de modifier le réseau pour qu'il améliore sa capacité de prédiction de toutes les valeurs de toutes les propriétés.

L'entraînement secondaire peut être réitéré plusieurs fois pour une ou pour plusieurs valeurs de propriété.

Suite à la mise en œuvre d'une époque, une validation de l'entraînement secondaire à partir du deuxième sous-ensemble $EDES1_V$ pour chaque valeur de propriété. Cette validation permet d'évaluer la précision de l'identification par le réseau de neurones NR à l'issue de l'entraînement secondaire..

Plus précisément, si, à la fin de la validation, la précision de l'identification (de la prédiction) n'augmente pas, l'entraînement secondaire est arrêté. Dans le cas contraire, on poursuit l'entraînement secondaire avec un nouveau cycle d'apprentissage et une nouvelle validation, et ainsi de suite jusqu'à ce que la précision de l'identification n'augmente pas.

Un test final peut ensuite être réalisé en utilisant le troisième sous-ensemble $EDES1_T$.

Le réseau de neurones RN artificiels entraîné suite à la mise en œuvre du procédé de la figure 3 est typiquement stocké dans la mémoire d'un dispositif tel qu'une passerelle réseau (« gateway », en terminologie anglo-saxonne), un serveur ou un terminal fixe ou mobile comme par exemple un ordinateur personnel, une tablette, une télévision ou un smartphone.

Par exemple le réseau de neurones RN est stocké dans la mémoire d'un serveur d'une infrastructure de fournisseur de service Internet et permet d'analyser les usages numériques des utilisateurs de ce service Internet.

Le réseau de neurones RN peut en variante être stocké dans la mémoire d'une passerelle réseau dans un réseau LAN (acronyme de « Local Area Network », en terminologie anglo-saxonne) et permet d'analyser les usages numériques des utilisateurs de ce réseau LAN.

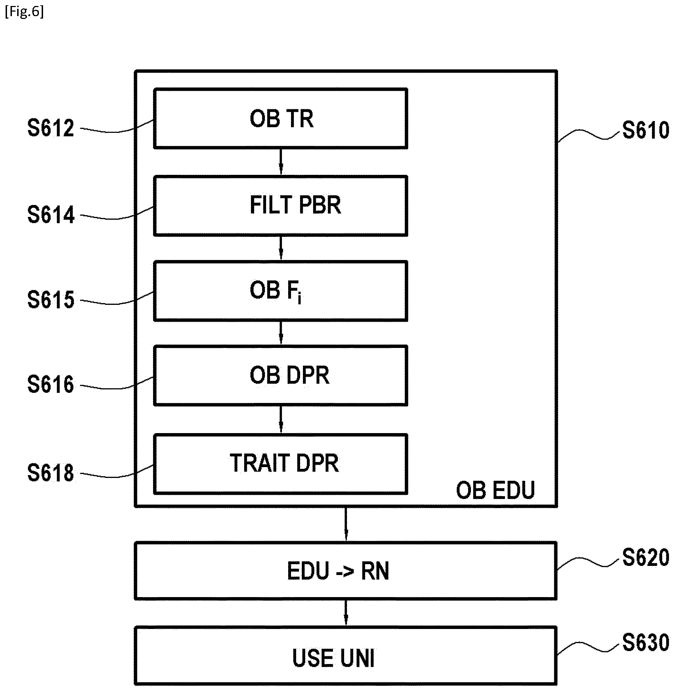

La **figure 6** représente un procédé d'utilisation du réseau de neurones artificiels entraîné par la mise en œuvre du procédé de la figure 3, pour identifier un usage numérique parmi l'ensemble d'usages numériques, le procédé d'utilisation étant conforme à un exemple de mode de réalisation de l'invention. Ce procédé est mis en œuvre par un dispositif conforme à un exemple de mode de réalisation de l'invention, comprenant le réseau de neurones RN entraîné.

Le dispositif comprend un deuxième module d'obtention et un deuxième module d'application (pouvant être le premier module d'obtention 110 et le premier module d'application 120 lorsque le dispositif est le terminal 100 ayant mis en œuvre le procédé d'entraînement), et présente typiquement l'architecture conventionnelle d'un ordinateur. Le dispositif comprend notamment un processeur, une mémoire morte (de type « ROM »), une mémoire non volatile réinscriptible (de type « EEPROM » ou « Flash NAND » par exemple), une mémoire volatile réinscriptible (de type « RAM »), et une interface de communication.

La mémoire morte ou la mémoire non volatile réinscriptible constitue un support d'enregistrement conforme à un exemple de mode de réalisation de l'invention, lisible par le processeur et sur lequel est enregistré un deuxième programme d'ordinateur conforme à un exemple de mode de réalisation de l'invention, permettant au dispositif de mettre en œuvre le procédé d'utilisation conforme à l'invention.

Ce deuxième programme d'ordinateur peut ainsi définir des modules fonctionnels et logiciels du dispositif, configurés pour mettre en œuvre les étapes d'un procédé d'utilisation conforme à un exemple de mode de réalisation de l'invention. Ces modules fonctionnels s'appuient sur ou commandent les éléments matériels du dispositif cités précédemment, et peuvent comprendre notamment ici le deuxième module d'obtention et le deuxième module d'application précités.

Dans une étape S610, un ensemble de données d'utilisation EDU est obtenu à partir d'une pluralité de paquets réseau par le deuxième module d'obtention.

Cette étape d'obtention S610 comprend une étape S612 d'obtention d'une trace réseau TR comprenant une pluralité de paquets réseau, typiquement au moyen d'un outil logiciel de capture. Les paquets réseaux obtenus, qui constituent la trace réseau TR obtenue, sont alors enregistrés dans le dispositif. Contrairement à l'étape S310 du procédé d'entraînement, la trace réseau TR obtenue n'est pas enregistrée en association avec des valeurs de propriétés associées.

L'étape d'obtention S610 comprend aussi typiquement une étape S614 de filtrage d'au moins un paquet réseau de bruit de fond PRB, cette étape de filtrage étant mise en œuvre de la même manière que l'étape de filtrage S314 du procédé d'entraînement de la figure 3, mais relativement à la trace réseau TR obtenue à l'étape S612.

De plus, l'étape S610 comprend, pour chaque paquet réseau d'un sous ensemble de paquets réseau de la trace réseau TR obtenue à l'étape S612, une étape S616 d'obtention d'un ensemble de données du paquet réseau DPR, cette étape étant mise en œuvre de la même manière que l'étape d'obtention S316 d'un ensemble de données du paquet réseau du procédé d'entraînement de la figure 3 mais relativement à la trace réseau TR obtenue à l'étape S612 et éventuellement filtrée à l'étape S614.

L'étape S310 comprend en outre une étape S618 de traitement des ensembles de données de paquets réseau obtenus à l'étape S616, de sorte à obtenir l'ensemble de données d'utilisation. Cette étape S618 de traitement est typiquement mise en œuvre de la même manière que l'étape S318 de traitement du procédé d'entraînement de la figure 3.

Dans une étape S620, l'ensemble de données d'utilisation est appliqué à l'entrée du réseau de neurones RN artificiels entraîné, de sorte à identifier l'usage numérique associé à l'ensemble de données d'utilisation.

Le réseau de neurones artificiels entraîné délivre alors en sortie un score de prédiction pour chaque valeur de chaque propriété de la pluralité de propriétés décrivant chaque usage numérique.

La valeur de chaque propriété de l'usage numérique est identifiée en déterminant la valeur de la propriété ayant le score de prédiction associé le plus grand et/ou supérieur au score de prédiction des autres valeurs de la même propriété

L'usage numérique est alors décrit par chaque valeur identifiée de propriété.

Le procédé d'utilisation peut en outre comprendre une étape S630 d'utilisation de l'usage numérique identifié UNI.

L'étape S630 utilise typiquement une pluralité d'usages numériques identifiés UNI, chaque usage numérique UNI étant identifié lors d'une mise en œuvre différente des étapes S610 et S620.

L'étape S630 comprend par exemple une recommandation d'un service personnalisé à l'utilisateur d'un terminal en fonction du ou des usages numériques identifiés au niveau de ce terminal. Par exemple, une application similaire à une application utilisée (typiquement de même catégorie) peut être recommandée, et/ou une application de catégorie liée à la catégorie de l'application utilisée, et/ou une application utilisée par les utilisateurs dans le même environnement numérique ou un environnement numérique similaire, et/ou une application ayant un fort taux d'utilisation.

Le dispositif mettant en œuvre le procédé d'utilisation est typiquement une passerelle réseau (ou passerelle domestique), la pluralité de paquets réseau de la trace réseau TR obtenue à l'étape S610 transitant sur un réseau de communications auquel est connectée ladite passerelle, typiquement un réseau de communications local, quel est aussi connecté au moins un terminal.

Le ou les usages numériques identifiés UNI peuvent alors typiquement avoir été réalisés au niveau d'un ou plusieurs terminaux du réseau local (voire au niveau de tous les terminaux) et l'étape S630 peut comprendre une optimisation de la répartition de charges dans le réseau de communications en fonction du ou des usages numériques UNI détectés au niveau de ces terminaux.

Par exemple un dimensionnement du réseau (i.e. de la bande passante) du terminal peut être effectué en fonction du ou des usages numériques UNI détectés au niveau de ces terminaux.

**EP 4 187 446 A1**

En variante ou en complément, l'étape S630 d'utilisation peut comprendre une reconnaissance (ou une détection) d'un utilisateur de réseau de communications local, et éventuellement le chargement d'un profil de l'utilisateur en fonction du ou des usages numériques UNI détectés au niveau du terminal.

En variante ou en complément, l'étape S630 d'utilisation peut comprendre une allocation des ressources internes de la passerelle en fonction du ou des usages numériques UNI détectés au niveau du terminal.

En variante ou en complément, l'étape S630 d'utilisation peut comprendre un contrôle d'usage indésirable au niveau du terminal, en fonction du ou des usages numériques UNI détectés au niveau du terminal.

**Revendications**

1. Procédé d'entraînement mis en œuvre par un ordinateur

   pour entraîner un réseau de neurones (RN) artificiels pour que ledit réseau de neurones (RN) artificiels identifie au moins une valeur d'une propriété parmi une pluralité de valeurs de propriétés, chaque propriété pouvant prendre au moins deux valeurs différentes, ledit réseau de neurones (RN) artificiels comportant une couche de sortie (CS) comportant, pour au moins une dite valeur de propriété, un neurone (NS) configuré pour délivrer un score de prédiction pour ladite valeur de propriété ;
   ledit procédé comprenant un entraînement primaire consistant à entraîner ledit réseau de neurones (RN) à identifier au moins une valeur cible de propriété à partir d'un premier ensemble de données d'entraînement primaire (EDEP1) étiquetées en associant ces données à un premier ensemble de valeurs cibles de propriétés, ledit procédé comportant en outre un entraînement secondaire comportant les étapes suivantes :

   - obtention (S311), pour au moins une première valeur cible (VC) d'une propriété cible (PC), d'un ensemble de données d'entraînement secondaire (EDES1) ;
   - identification (S350) d'une valeur estimée (VE) de la propriété cible (PC) associée à au moins une dite donnée d'entraînement secondaire (EDES1), en utilisant le réseau de neurones (RN) artificiels entraîné par ledit entrainement primaire ;
   - pour chaque valeur estimée (VE) différente de ladite première valeur cible (VC), obtention (S360) d'un nombre de confusions ($NC_{VE}$) correspondant au nombre de fois où ladite valeur estimée (VE) a été estimée ;
   - augmentation (S370) des taux d'apprentissage (LR) associés auxdits neurones (NS) de la couche de sortie (CS) dudit réseau de neurones (NS) associés à des valeurs d'intérêt (VI) correspondant à des valeurs estimées (VE) ayant les nombres de confusions ($NC_{VE}$) les plus importants.

2. Procédé d'entraînement selon la revendication 1, dans lequel ledit réseau de neurones (RN) artificiels est configuré pour identifier un usage numérique parmi un ensemble d'usages numériques, chaque usage numérique étant décrit par un comportement numérique associé à au moins une dite propriété et par un environnement numérique associé à au moins une dite propriété ;

   - ledit entraînement primaire consistant à entraîner ledit réseau de neurones (RN) à identifier au moins un usage numérique cible (UNC1) parmi ledit ensemble d'usages numériques, les données dudit premier ensemble de données d'entraînement primaire (EDEP1) étant extraites d'une première pluralité de paquets réseau capturés lors d'au moins une exécution d'une application associée audit premier usage numérique cible (UNC1), lesdites données d'entraînement primaire (EDEP1) étant étiquetées en associant ces données à un premier ensemble de valeurs cibles de propriétés décrivant au moins un comportement numérique et un environnement numérique dudit premier usage numérique cible (UNC1),
   - les données dudit ensemble de données d'entraînement secondaire (EDES1) obtenu pour ladite au moins une première valeur cible (VC) étant extraites d'une deuxième pluralité de paquets réseau capturés lors d'au moins une exécution d'une application associée à un usage numérique dont ladite propriété cible (PC) est décrite par ladite première valeur cible (VC).

3. Procédé d'entraînement selon la revendication 1 ou 2, dans lequel, lors dudit entraînement primaire, lesdits taux d'apprentissage (LR) associés auxdits neurones (NS) de la couche de sortie (CS) dudit réseau de neurones ont la même valeur.

4. Procédé d'entraînement selon l'une quelconque des revendications 1 à 3, dans lequel ladite augmentation d'un dit taux d'apprentissage (LR) consiste à multiplier ce taux d'apprentissage (LR) par une constante.

**5.** Procédé d'entraînement selon l'une quelconque des revendication 1 à 4, dans lequel ledit entraînement primaire comporte les étapes suivantes :

- obtention (S311) dudit premier ensemble de données d'entraînement primaire (EDEP1) ;
- application (S330) dudit premier ensemble de données d'entraînement primaire (EDEP1) à l'entrée du réseau de neurones (RN) artificiels, et
- modification (S340) d'au moins un poids du réseau de neurones (RN) artificiels en fonction du premier ensemble de valeurs cibles de propriétés et des scores de prédictions obtenus.

**6.** Procédé d'entraînement selon l'une quelconque des revendications 2 à 5, dans lequel les propriétés définissant l'usage numérique comprennent au moins une propriété parmi les propriétés suivantes :

- une catégorie d'application utilisée,
- une application utilisée,
- une opération mise en œuvre au niveau de l'application,
- un état d'interaction de l'utilisateur,
- un dispositif utilisé,
- un système d'exploitation utilisé,
- un navigateur utilisé, et
- au moins une caractéristique liée d'un réseau de communication.

**7.** Procédé d'entraînement selon l'une quelconque des revendications 2 à 6, dans lequel lesdits premier ensemble de données d'entraînement primaire (EDEP1) et secondaire (EDES1) comprennent, pour chaque paquet de la première et de la deuxième pluralité de paquets réseau, au moins une donnée d'entraînement parmi les données d'entraînement suivantes :

- la taille du paquet,
- une durée entre la réception ou l'envoi du paquet et la réception ou l'envoi d'un paquet précédent d'une même session ou d'un même protocole que ledit paquet,
- un port source du paquet,
- un port destination du paquet,
- une direction du paquet, et
- un protocole d'une couche de plus haut niveau dans le paquet.

**8.** Procédé d'entraînement selon l'une quelconque des revendications 1 à 7, dans lequel ledit entraînement primaire est réitéré pour un au moins un deuxième ensemble de données d'entraînement primaire associé à un deuxième ensemble de valeurs cibles de propriétés décrivant un deuxième usage numérique.

**9.** Procédé d'entraînement selon l'une quelconque des revendications 1 à 8, dans lequel ledit entraînement secondaire est réitéré pour un au moins une deuxième valeur cible d'une propriété cible.

**10.** Procédé d'entraînement selon l'une quelconque des revendications 1 à 9, dans lequel l'entraînement primaire utilise un apprentissage multitâche.

**11.** Procédé d'entraînement selon l'une quelconque des revendications 2 à 10, dans lequel l'obtention (S310) dudit premier ensemble de données d'entraînement primaire (EDEP1) et l'obtention dudit premier ensemble de données d'entraînement secondaire (EDES1) comprennent chacun les étapes suivantes :

- obtention d'un sous ensemble de paquets réseau et, pour chaque paquet réseau dudit sous ensemble :

- obtention (S316) d'un ensemble de données du paquet réseau (DPR), et
- traitement (S318) dudit ensemble de données du paquet réseau (DPR),

de sorte à obtenir le premier ensemble de données d'entraînement (EDE1),
l'étape (S318) de traitement comprenant :

- pour chaque donnée (DPR) dudit ensemble de données du paquet réseau (DPR) prenant la forme d'une variable catégorielle, conversion de la valeur en un vecteur de valeurs binaires, et
- pour chaque donnée (DPR) dudit ensemble de données du paquet réseau (DPR) ayant une valeur numérique définie dans un intervalle différent de l'intervalle compris entre 0 et 1, normalisation de la valeur de sorte qu'elle soit définie dans l'intervalle compris entre 0 et 1.

12. Procédé d'entraînement selon la revendication 11, dans lequel le sous ensemble de paquets réseau comprend un maximum de cent paquets réseau.

13. Procédé d'entraînement selon l'une quelconque des revendications 2 à 12, comprenant en outre une étape (S314) de filtrage d'au moins un paquet réseau qui n'est pas associé à une opération mise en œuvre par un utilisateur au niveau d'une application.

14. Système d'entraînement d'un réseau de neurones (RN)
artificiels pour que ledit réseau de neurones (RN) artificiels identifie au moins une valeur de propriété parmi une pluralité de valeurs de propriétés, chaque propriété pouvant prendre au moins deux valeurs différentes, le réseau de neurones (RN) artificiels comportant une couche de sortie (CS) comportant, pour au moins une dite valeur de propriété, un neurone (NS) configuré pour délivrer un score de prédiction pour ladite valeur propriété ledit système comprenant :

- un module (110) d'obtention configuré pour obtenir un premier ensemble de données d'entraînement primaire (EDEP1) étiquetées en associant ces données à un premier ensemble de valeurs cibles de propriétés;
- un module d'application (120) configuré pour appliquer le premier ensemble de données d'entraînement primaire (EDEP1) à l'entrée du réseau de neurones (RN) artificiels, pour entraîner, au cours d'un entraînement primaire, ledit réseau de neurones (RN) à identifier au moins une dite valeur cible de propriété,
- un module de modification (130) configuré pour modifier au moins un poids du réseau de neurones (RN) artificiels en fonction du premier ensemble de valeurs cibles de propriétés et des scores de prédictions obtenus ledit système étant **caractérisé en ce que** :
- ledit module d'obtention (110) est configuré pour obtenir, pour au moins une première valeur cible (VC) d'une propriété cible (PC), un ensemble de données d'entraînement secondaire (EDES1) ;
- ledit module d'application (120) est configuré pour appliquer, au cours d'un entraînement secondaire, au moins une donnée de l'ensemble de données d'entraînement secondaire (EDES1) à l'entrée du réseau de neurones (RN) pour identifier une valeur estimée (VE) de ladite propriété cible (PC) associée à au moins une dite donnée d'entraînement secondaire (EDES1), en utilisant le réseau de neurones (RN) artificiels entraîné par ledit entrainement primaire ;
- ledit module de modification (130) étant configuré pour obtenir, pour chaque valeur estimée (VE) différente de ladite première valeur cible (VC), un nombre de confusions ($NC_{VE}$) correspondant au nombre de fois où ladite valeur estimée (VE) a été estimée et pour augmenter des taux d'apprentissage (LR) associés auxdits neurones (NS) de la couche de sortie (CS) dudit réseau de neurones (NS) associés à des valeurs d'intérêt (VI) correspondant à des valeurs estimées (VE) ayant les nombres de confusions ($NC_{VE}$) les plus importants.

15. Système d'entraînement (100) selon la revendication 14
dans lequel lesdites propriétés sont des propriétés utilisées pour décrire des usages numériques, ledit réseau de neurones artificiels (RN) étant configuré pour identifier un usage numérique parmi un ensemble d'usages numériques, chaque usage numérique chaque usage numérique étant décrit par un comportement numérique associé à au moins une dite propriété et par un environnement numérique associé à au moins une dite propriété,

- ledit système étant **caractérisé en ce qu'**il est configuré pour mettre en œuvre le procédé d'entraînement selon la revendication 2.

16. Programme d'ordinateur (P1) comportant des instructions pour l'exécution des étapes du procédé d'entraînement selon l'une quelconque des revendications 1 à 13 lorsque ledit programme est exécuté par un ordinateur.

17. Support d'enregistrement lisible par un ordinateur sur lequel est enregistré un programme d'ordinateur (P1) comprenant des instructions qui, lorsqu'elles sont exécutées par un ordinateur, conduisent celui-ci à mettre en œuvre l'exécution des étapes du procédé d'entraînement selon l'une quelconque des revendications 1 à 13.

18. Dispositif comprenant un réseau de neurones (RN) artificiels entraîné par le procédé d'entraînement selon l'une quelconque des revendications 1 à 13.

**19.** Dispositif selon la revendication 18, **caractérisé en ce que** ce dispositif est une passerelle réseau.

**20.** Procédé d'utilisation du dispositif selon la revendication 18, le réseau de neurones artificiel (RN) de ce dispositif étant entraîné pour identifier au moins une valeur d'une propriété parmi un ensemble de valeurs de propriétés,

ledit procédé d'utilisation comprenant les étapes suivantes :

- obtention (S612) d'un ensemble de données d'utilisation (EDU),
- application (S620) de l'ensemble de données d'utilisation (EDU) à l'entrée du réseau de neurones (RN) artificiels,

ladite valeur de propriété identifiée étant celle ayant le score de prédiction associé le plus grand parmi les scores de prédiction des autres valeurs de la même propriété.

**21.** Procédé d'utilisation selon la revendication 20, dans lequel ladite valeur de propriété identifiée par ledit réseau (RN) est un usage numérique, lesdites données d'utilisation étant obtenues à partir d'une pluralité de paquets réseau.

[Fig.1]

[Fig.2]

[Fig.3]

[Fig.4A]

EP 4 187 446 A1

PRm

PR2

PR1

TR

[Fig.4B]

[Fig.5]

[Fig.6]

[Fig.7]

UNC1

| COMPORTEMENT NUMERIQUE | ENVIRONNEMENT NUMERIQUE |
|---|---|
| ● Catégorie d'application = Videostreaming<br>● Application = Youtube<br>● Opération = PlayContent<br>● Etat d'interaction = 1 | ● Dispositif = Ordinateur personnel<br>● Système d'exploitation = Windows 10<br>● Navigateur = Firefox<br>● Débit montant = supérieur à 1 Mbps<br>● Débit descendant =entre 1 et 10 Mbps |

[Fig.8]

| | Youtube | Twitch | OrangeTV | Netflix | Dailymotion | MonolovTV | Gmail | Facebook |
|---|---|---|---|---|---|---|---|---|
| Youtube | 812 | 30 | 29 | 28 | 27 | 13 | 5 | 1 |

# EP 4 187 446 A1

Europäisches
Patentamt

European
Patent Office

Office européen
des brevets

## RAPPORT DE RECHERCHE EUROPEENNE

Numéro de la demande

EP 22 20 7594

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ACETO GIUSEPPE ET AL: "Encrypted Multitask Traffic Classification via Multimodal Deep Learning", ICC 2021 – IEEE INTERNATIONAL CONFERENCE ON COMMUNICATIONS, IEEE, 14 juin 2021 (2021-06-14), pages 1-6, XP033953625, DOI: 10.1109/ICC42927.2021.9500316 * abrégé * * page 1, colonne de gauche, ligne 1 – page 6, colonne de droite, ligne 10 * ----- | 1-21 | INV. G06N3/096 G06N3/09 G06N3/048 G06N3/084 |
| A | SHAHBAZ REZAEI ET AL: "How to Achieve High Classification Accuracy with Just a Few Labels: A Semi-supervised Approach Using Sampled Packets", ARXIV.ORG, CORNELL UNIVERSITY LIBRARY, 201 OLIN LIBRARY CORNELL UNIVERSITY ITHACA, NY 14853, 16 mai 2020 (2020-05-16), XP081662990, * abrégé * * page 1, ligne 1 – page 14, dernière ligne * ----- | 1-21 | |
| A | LI WENBIN ET AL: "Towards a Multi-Label Dataset of Internet Traffic for Digital Behavior Classification", 2021 3RD INTERNATIONAL CONFERENCE ON COMPUTER COMMUNICATION AND THE INTERNET (ICCCI), IEEE, 25 juin 2021 (2021-06-25), pages 38-46, XP033946348, DOI: 10.1109/ICCCI51764.2021.9486831 * abrégé * * page 38, colonne de gauche, ligne 1 – page 46, colonne de gauche, ligne 25 * ----- -/-- | 1-21 | DOMAINES TECHNIQUES RECHERCHES (IPC) G06N |

Le présent rapport a été établi pour toutes les revendications

| Lieu de la recherche | Date d'achèvement de la recherche | Examinateur |
|---|---|---|
| La Haye | 17 février 2023 | Totir, Felix |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

**EP 22 20 7594**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Kingma D.P ET AL: "Adam: A Method for Stochastic Optimization", arXiv:1412.6980v9, 30 janvier 2017 (2017-01-30), XP055828333, Extrait de l'Internet: URL:https://arxiv.org/pdf/1412.6980.pdf [extrait le 2021-07-28] * abrégé * * page 1, ligne 1 – page 10, ligne 10 * ----- | 1-21 | |
| T | LI WENBIN ET AL: "Multi-Task Attention Network for Digital Context Classification from Internet Traffic", 2022 7TH INTERNATIONAL CONFERENCE ON MACHINE LEARNING TECHNOLOGIES (ICMLT) , 11 mars 2022 (2022-03-11), pages 284-291, XP055937218, New York, NY, USA DOI: 10.1145/3529399.3529444 ISBN: 978-1-4503-9574-8 Extrait de l'Internet: URL:https://dl.acm.org/doi/pdf/10.1145/3529399.3529444 [extrait le 2022-07-05] * abrégé * * page 284, colonne de gauche, ligne 1 – page 290, colonne de droite, ligne 10 * ----- | 1-21 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 17 février 2023 | Totir, Felix |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)